(19) Europäisches Patentamt
European Patent Office
Office européen des brevets

(11) EP 3 950 624 A1

(12) **EUROPEAN PATENT APPLICATION**
published in accordance with Art. 153(4) EPC

(43) Date of publication:
**09.02.2022 Bulletin 2022/06**

(21) Application number: **20784892.0**

(22) Date of filing: **03.04.2020**

(51) International Patent Classification (IPC):
***C03C 21/00*** (2006.01) ***C09J 11/06*** (2006.01)
***C09K 9/02*** (2006.01) ***G02C 7/10*** (2006.01)
***C09J 175/04*** (2006.01) ***C08G 18/28*** (2006.01)
***C08G 18/32*** (2006.01) ***C08G 18/38*** (2006.01)
***C08G 18/66*** (2006.01) ***C08G 18/72*** (2006.01)
***C08G 18/75*** (2006.01) ***G02B 5/23*** (2006.01)

(52) Cooperative Patent Classification (CPC):
**C03C 21/00; C08G 18/28; C08G 18/32; C08G 18/38; C08G 18/66; C08G 18/72; C08G 18/75; C09J 11/06; C09J 175/04; C09K 9/02; G02B 5/23; G02C 7/10**

(86) International application number:
**PCT/JP2020/015374**

(87) International publication number:
**WO 2020/204176 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.04.2019 JP 2019071587**
**26.12.2019 JP 2019237232**
**26.12.2019 JP 2019237233**

(71) Applicant: **Tokuyama Corporation**
**Shunan-shi, Yamaguchi 745-8648 (JP)**

(72) Inventors:
- **MORI, Katsuhiro**
  **Shunan-shi, Yamaguchi 745-8648 (JP)**
- **NOGUCHI, Takao**
  **Shunan-shi, Yamaguchi 745-8648 (JP)**
- **MOMODA, Junji**
  **Shunan-shi, Yamaguchi 745-8648 (JP)**

(74) Representative: **Gerauer, Marc Philippé**
**Kraus & Weisert**
**Patentanwälte PartGmbB**
**Thomas-Wimmer-Ring 15**
**80539 München (DE)**

(54) **PHOTOCHROMIC OPTICAL ARTICLE AND METHOD FOR MANUFACTURING SAME**

(57) The present invention relates to a photochromic optical article including a pair of optical article plates bonded together through an adhesive layer containing a photochromic compound and at least one resin selected from a urethane resin, an epoxy resin, and an acrylic resin, wherein a deviation of the thickness of the adhesive layer on a concentric circle from the central point of the pair of optical article plates is within ±10%.

In accordance with the present invention, in the photochromic optical article formed of a pair of optical article plates bonded together through an adhesive layer, a photochromic optical article in which the thickness of the photochromic adhesive layer is prescribed, and which is free from problems, such as a lowering of the appearance quality, can be provided.

Fig. 1

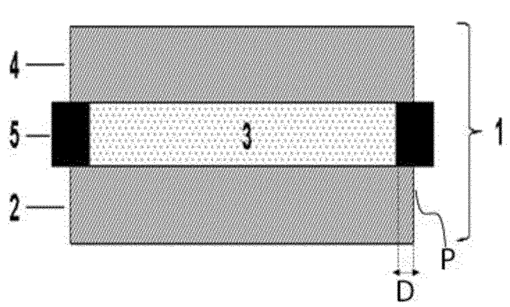


EP 3 950 624 A1

## Description

Technical Field

The present invention relates to a photochromic optical article in which a pair of optical article plates are bonded together through an adhesive layer obtained by curing a photochromic adhesive composition, and to a method for manufacturing the same.

Background Art

In recent years, particularly, in the U.S., photochromic sunglasses in which photochromic properties are given to sunglasses having anti-glare properties have been rapidly gaining popularity. In the foregoing photochromic sunglasses, the transmittance of a lens is changed according to the ambient brightness (the amount of ultraviolet light), and thus the anti-glare properties can be adjusted.

As methods for manufacturing such photochromic sunglasses, for example, a method in which a photochromic polymerizable composition having a photochromic compound blended in a polymerizable composition is molded in the shape of a lens; a method in which a photochromic polymerizable composition is used as an adhesive, and a pair of lenses are bonded together; and the like are known (see, for example, PTLs 1 to 4).

Citation List

Patent Literature

PTL 1: WO 2014/136804 A
PTL 2: JP 2007-138186 A
PTL 3: JP 2012-052091 A
PTL 4: JP 01-033154 A
PTL 5: JP 2003-139914 A

Summary of Invention

Technical Problem

However, in the manufacturing method in which the photochromic polymerizable composition is molded in the shape of a lens, the durability of the photochromic sunglasses obtained is not sufficient, and when using the photochromic sunglasses in the environment in which they are exposed to sunlight for a long period of time, the photochromic properties were easily degraded.

On the other hand, in the manufacturing method in which the photochromic polymerizable composition is used as an adhesive, and a pair of lenses are bonded together, as compared with the manufacturing method in which the photochromic polymerizable composition is molded in the shape of a lens, the durability of the photochromic sunglasses can be improved. However, there was involved a problem regarding the bonding strength of the pair of lenses and the durability of the adhesive layer. Then, the present inventors propose a photochromic optical article formed by bonding together the pair of optical articles with an adhesive composition containing a photochromic compound and having a specified composition, in which the bonding strength of the pair of optical articles and the durability of the adhesive layer are sufficient, and the durability of the photochromic properties are improved (International Application PCT/JP2019/015319).

However, in the manufacturing method of curing the photochromic adhesive to bond together the pair of lenses, a deviation is liable to be caused in the thickness of the adhesive layer. In general, since a photochromic color development density depends on the thickness of the photochromic layer, if a deviation is caused in the thickness of the photochromic adhesive layer, uneven color development is caused as photochromic sunglasses, thereby resulting in a direct lowering of appearance quality. Then, in order to prescribe the thickness of the adhesive layer, there is an idea of using a spacer. However, in the conventional manufacturing method (for example, see PTL 5), there was room for improvement in terms of manufacturing of a high-quality photochromic optical article. That is, a bubble is produced in the periphery of the spacer during curing of the adhesive, thereby causing a poor appearance.

In view of the foregoing conventional circumstances, the present invention has been made, and a problem thereof is to provide a photochromic optical article in which the thickness of an adhesive layer containing a photochromic

compound is prescribed and which is free from problems, such as a lowering of the appearance quality.

Solution to Problem

In order to solve the aforementioned problem, the present inventors made extensive and intensive investigations regarding a photochromic optical article in which the thickness of an adhesive layer containing a photochromic compound is prescribed and which is free from problems, such as a lowering of the appearance quality. As a result, the present invention has been accomplished as follows.

Specifically, the photochromic optical article of the present invention is a photochromic optical article which is formed by bonding together a pair of optical article plates with an adhesive layer containing a photochromic compound and at least one resin selected from a urethane resin, an epoxy resin, and an acrylic resin, wherein a deviation of the thickness of the adhesive layer on a concentric circle from the central point of the pair of optical article plates is within ±10%.

In addition, the method for manufacturing a photochromic optical article according to the present invention, in which a deviation of the thickness of an adhesive layer on a concentric circle from the central point of a pair of optical article plates is within ±10%, is a manufacturing method including

a step of applying a photochromic adhesive composition comprising (A) a photochromic compound and (B) at least one curable compound selected from a polyiso(thio)cyanate/poly(thi)ol mixture, an epoxy compound, and an acrylic compound on one of the optical article plates;
a step of arranging a spacer on an applied surface of the optical article plate having the photochromic adhesive composition applied thereon and superimposing and arranging the other optical article plate so as to provide a predetermined gap; and
a step of curing the photochromic adhesive composition to form an adhesive layer, thereby bonding together the pair of optical article plates, wherein
the spacer is arranged in the outer periphery of the optical article plate, and a length of the spacer sandwiched between the pair of optical article plates is 0.25 mm to 1.2 mm, and preferably
the step of curing the photochromic adhesive composition to form an adhesive layer, thereby bonding together the pair of optical article plates includes at least the following two steps:

(i) a temperature rise step of raising the temperature from a curing starting temperature to a predetermined curing temperature at a rate of 0.1°C to 1.6°C per minute, and subsequently
(ii) a constant temperature step of holding the predetermined curing temperature for a fixed time.

Advantageous Effects of Invention

In accordance with the present invention, it is possible to provide a photochromic optical article in which the thickness of the photochromic adhesive layer is prescribed, and which is free from problems, such as a lowering of the appearance quality.

Brief Description of Drawings

Fig. 1 is a cross-sectional view showing one form of a photochromic optical article manufactured by the present invention.
Fig. 2 is a drawing explaining a deviation of the thickness of an adhesive layer.
Fig. 3 is a diagrammatic view expressing the molecular structure of a polyrotaxane monomer.
Fig. 4 is a view explaining one embodiment of the shape of a spacer.

Description of Embodiments

<Photochromic Optical Article>

The photochromic optical article of the present invention is a photochromic optical article which is formed by bonding together a pair of optical article plates with an adhesive layer containing a photochromic compound and at least one resin selected from a urethane resin, an epoxy resin, and an acrylic resin, wherein a deviation of the thickness of the adhesive layer on a concentric circle from the central point of the pair of optical article plates is within ±10%.

One form of the photochromic optical article according to the present invention is shown in Fig. 1. Fig. 1 expresses the state in a specified step in a suitable manufacturing method shown below, and a photochromic optical article 1 has a structure in which an optical article plate 2 and an optical article plate 4 are bonded together through an adhesive layer 3 containing a resin, the thickness of which is prescribed by a spacer 5. Fig. 1 is a diagrammatic view, and it should be construed that the shape of the photochromic optical article according to the present invention is not limited to this example. Thereafter, the spacer is removed, and if desired, spacer marks are removed by cutting, grinding, or the like, thereby providing one form of the photochromic optical article of the present invention.

The photochromic optical article of the present invention is hereunder described in detail.

In the present invention, the shape of the optical article plate is not particularly limited, and for example, when used for a spectacle application, typically, a circular optical article plate is used. In addition, though the size of the pair of optical article plates is not particularly restricted, too, taking into consideration the matter of use upon bonding together the pair of optical article plates, the same shape is preferred.

The deviation of the thickness of the adhesive layer in the present invention is described by reference to Fig. 2. In Fig. 2, for the sake of explanation, though the optical article plate 4, the adhesive layer 3, and the optical article plate 2 are expressed at intervals, actually, the pair of optical article plates are bonded together with the adhesive layer 3 as shown in Fig. 1.

The "thickness of the adhesive layer on a concentric circle from the central point of the pair of optical article plates" means the thickness of the adhesive layer on the circumference in a concentric circle a (radius r) from a center C2 of the adhesive layer 3 corresponding to a center C1 of the pair of optical article plates. In other words, it means the thickness of the adhesive layer 3 existing in the thickness direction (downward) of the circumference of the concentric circle having a radius r on the basis of the center C1 of the optical article plate. Here, the center C1 of the optical article plate is the central point on the basis of a shape seen from the upper part in the thickness direction of the optical article plate; it means a center when the aforementioned shape is circular, the point of intersection of the major axis with the minor axis when the shape is elliptic, and the point of intersection diagonal lines when the shape is rectangular, respectively. When the shape is other than a circle, an ellipse, or a rectangle, the center may be the center of gravity of the shape. In addition, the center C2 of the adhesive layer 3 exists at a position of the point of intersection of a straight line drawn down in the thickness direction from the center C1 of the optical article plate with the adhesive layer 3.

In the present invention, preferably, the center C1 of the optical article plate 4 and a center C1' of the optical article plate 2 are positioned on the same line parallel to the thickness direction; however, strictly, there may be a case where the center C1 of the optical article plate 4 and the center C1' of the optical article plate 2 are not positioned on the same line. In such a case, the deviation may be calculated on the basis of one of C1 and C1' and satisfied with the requirement prescribed in the present invention.

The deviation of the thickness of the adhesive layer refers to a deviation of the thickness on the circumference in the concentric circle a having a radius r. The foregoing deviation can be determined from a deviation resulting from equally measuring the thickness on the circumference at the 12 points, calculating an average value thereof as an average thickness $t_{ave}$, and using this as a reference. More specifically, the matter that the deviation is ±X% means that among the measured values at the 12 points, a thickness $t_1$ at the measurement point at which a difference in thickness from the average thickness $t_{ave}$ is largest is specified, and an absolute value of a value calculated according to the following equation is X%.

$$[(t_1 - t_{ave})/t_{ave}] \times 100 \qquad (1)$$

In the present invention, in a concentric circle a having an arbitrary radius r, the deviation of the thickness of the adhesive layer may be within ±10%. According to this, a photochromic optical article with less uneven color development can be obtained. The deviation is preferably within ±7.5%, and more preferably within ±5%.

When the maximum radius of the concentric circle a which can be taken is defined as $r_{max}$, the radius r is preferably r = 0.1 $r_{max}$ to 0.9 $r_{max}$, and more preferably r = 0.5 $r_{max}$ to 0.7 $r_{max}$.

For example, in the case of using the photochromic optical article of the present invention for a spectacle application, the maximum radius of the concentric circle a from the center C2 of the adhesive layer 3 is generally 20 mm to 50 mm, and preferably 30 mm to 40 mm.

Furthermore, not only in the concentric circle a having an arbitrary radius r, the deviation of the thickness of the adhesive layer is within ±10%, but also in the concentric circle having a radius different from the radius r, the deviation of the thickness of the adhesive layer is preferably within ±20%, and more preferably within ±10%.

In plural concentric circles having a different radius r, the deviation of the thickness of the adhesive layer is preferably within ±10%, and for example, it is preferred that all of the deviation of the thickness of the adhesive layer in the concentric circle having a radius of 0.5 $r_{max}$, the deviation of the thickness of the adhesive layer in the concentric circle having a radius of 0.2 $r_{max}$, and the deviation of the thickness of the adhesive layer in the concentric circle having

a radius of 0.8 $r_{max}$ are preferably within ±10%, more preferably within ±7.5%, and still more preferably within ±5%. Furthermore, all of the deviations of the thickness of the adhesive layer in concentric circles having every radius are preferably within ±10%, more preferably within ±7.5%, and still more preferably within ±5%. In this way, by controlling the deviations of the thickness of the adhesive layer in plural concentric circles having a different radius to a fixed level or less, a photochromic optical article in which the uneven color development is highly inhibited can be obtained.

From the viewpoint of more highly inhibiting the uneven color development, it is preferred that the deviations of the thickness of plural concentric circles having a different radius are small. For example, the deviations of the thickness among different concentric circles of 0.2 $r_{max}$, 0.5 $r_{max}$, and 0.8 $r_{max}$ are preferably within ±10%. Here, the matter that the deviation of the thickness among different concentric circles is ±Y means that an absolute value of a value calculated according to the following equation (2) is Y%.

That is, it is meant that with respect to the respective concentric circles of 0.2 $r_{max}$, 0.5 $r_{max}$, and 0.8 $r_{max}$, the thickness on the circumference is equally measured at 12 points, and the thickness at 36 points in total is measured; an average value ($T_{ave}$) of the thickness at 36 points is calculated, and among the measured values at 36 points, a thickness $T_1$ at the measurement point at which a difference in thickness from the average thickness $T_{ave}$ is largest is specified; and an absolute value of a value calculated according to the following equation (2) is Y%.

$$[(T_1 - T_{ave})/T_{ave}] \times 100 \qquad (2)$$

In the present invention, it is suitable that no bubble is produced at a stage of bonding together a pair of optical article plates to form a photochromic optical article. Even when a bubble is produced at a stage of bonding together a pair of optical article plates, it would be possible to remove them by cutting, grinding, or the like; however, the subsequent application is restricted, and hence, such is not preferred.

[Optical Article Plate]

The material of the optical article plate is not particularly restricted so long as it is one to be used in an optical article, for example, a lens, and it may be either an inorganic material or an organic material. In addition, a color tone may not be colorless transparent, and it may be a transparent color tone colored in a specified color, for example, black, gray, brown, beige, blue, or red.

Examples of the inorganic material include general-purpose glass materials, such as a soda glass, a flint glass, and a crown glass. Examples thereof include glass materials having at least one oxide among $SiO_2$, $B_2O_3$, $Al_3O_3$, $Na_2CO_3$, $Na_2O$, $K_2O$, CaO, $Ca(OH)_2$, $CaCO_3$, Ca, BaO, MgO, PbO, ZnO, $MnO_2$, $Al_2O_3$, $Al_2O_5$, $Li_2O$, $Nb_2O_5$, $ZrO_2$, $Fe_2O_3$, $CeO_2$, $TiO_2$, $La_2O_3$, SrO, $As_2O_3$, and $Sb_2O_3$. Among these glass materials, a crown glass is preferred.

The glass material may be a glass material having specified properties, for example, a chemically strengthened glass material, a high-refractive index glass material having a refractive index of 1.7 or more, a glass material having ultraviolet absorption properties, and a glass material that cuts blue light.

As the chemically strengthened glass material (hereinafter also referred to as "chemically strengthened glass"), known chemically strengthened glasses can be used without any restrictions. For example, a chemically strengthened glass by the low-temperature type ion exchange method is general. The low-temperature type ion exchange method is a method of performing the treatment by bringing a glass into contact with a molten salt of an alkali having an ionic radius larger than that of an alkali contained in the glass at a temperature of not higher than a transition temperature. Namely, the low-temperature type ion exchange can be carried out by treating a glass containing $Li^+$ with a molten salt containing $Na^+$ derived from sodium nitrate or the like, or treating a glass containing $Na^+$ with a molten salt containing $K^+$ derived from potassium nitrate or the like. As for the chemically strengthened glass by the low-temperature type ion exchange method, after the treatment by the low-temperature type ion exchange, by performing cooling, due to a difference in expansion coefficient between the surface layer and the internal layer of the glass, compression remains on the surface and a tensile stress remains in the interior, and therefore, the impact resistance is improved.

As the high-refractive index glass material having a refractive index of 1.7 or more, known materials can be used without any restrictions. Above all, the refractive index is preferably 1.7 to 2.1, and especially preferably 1.7 to 1.9.

As a method for regulating the refractive index to 1.7 or more, among the aforementioned glass materials, a glass material containing at least one oxide selected from $TiO_2$, $La_2O_3$, $Nb_2O_5$, and $ZrO_2$ is preferably used.

As the glass material having ultraviolet absorption (hereinafter also referred to as "ultraviolet absorption performance glass") and/or the glass material that cuts blue light (hereinafter also referred to as "blue light cutting glass"), known materials can be used without any restrictions. As for a method for giving an ultraviolet absorption performance and/or a blue light cutting performance, among the aforementioned glass materials, a glass material containing at least one oxide selected from $Fe_2O_3$, $CeO_2$, and $TiO_2$ is preferably used.

As for the ultraviolet absorption performance, a transmittance at 400 nm is preferably 50% or less, more

preferably 30% or less, and most preferably 10% by mass or less.

As a weak ultraviolet absorption performance glass, a glass having a transmittance at 360 nm of 50% to 90% can also be used.

As for the blue light cutting performance, a transmittance at 425 nm is preferably 50% or less, more preferably 40% or less, and most preferably 30% or less.

Meanwhile, examples of the organic material include a polycarbonate resin, a polyester resin, a cellulose resin, a polyamide resin, an allyl resin, a (meth)acrylic resin, a polyurethane resin, a polyurethane urea resin, a polythiourethane resin, a polythioepoxy resin, an epoxy resin, a polyimide resin, and a polyolefin resin. The "(meth)acrylic resin" means both an "acrylic resin" and a "methacrylic resin".

The organic material may also be an organic material having specified properties, for example, a high-refractive index organic material having a refractive index of 1.7 or more, an organic material having ultraviolet absorption properties, and an organic material that cuts blue light. As the high-refractive index organic material having a refractive index of 1.7 or more, known materials can be used without any restrictions. Examples of the organic material having ultraviolet absorption properties include known organic materials containing a blending material having UV absorption properties. In this case, the required ultraviolet absorption performance is the same as in the inorganic material. Examples of the organic material that cuts blue light include known organic materials containing a blending material having a blue light cutting performance. In this case, the required blue light cutting performance is the same as in the inorganic material.

Among these materials for optical article plate, in view of the fact that an adhesive layer as mentioned later, particularly an adhesive layer containing a urethane resin has very excellent adhesion especially to an optical article plate formed of an inorganic material, and since an inorganic material is excellent in gas barrier properties as compared with an organic material, it inhibits the photo-oxidation degradation of the photochromic compound, in the photochromic optical article according to the present invention, especially excellent effects are exhibited in the case of using an optical article plate formed of an inorganic material. In addition, it is preferred that at least one of the pair of optical article plates is an optical article plate having a refractive index of 1.7 or more.

The pair of optical article plates may be the same as or different from each other, and may be appropriately set up according to the purpose.

For example, when the photochromic optical article of the present invention is used as a spectacle lens, the optical article plate on a side (hereinafter also referred to as "inner side") close to an eye and the optical article plate on a side (hereinafter also referred to as "outer side") which is far from the eye and to which more sunlight is applied outdoors are combined together.

In this case, when the photochromic properties are required to be sufficiently exhibited, it is preferred to use a glass material or organic material having weak ultraviolet absorption properties as the optical article plate on the outer side. Specifically, it is preferred to use a glass material or organic material having a transmittance of light having a wavelength of 380 nm of 50% or more. In addition, when the impact resistance is required, an organic material or chemically strengthened glass may also be used.

On the other hand, when it is required to protect the eye from ultraviolet light, a glass material, a blue light cutting glass, or an organic material having high UV absorption properties is preferably used for the optical article plate on the inner side. Specifically, a glass material having a transmittance of light having a wavelength of 400 nm of 10% or less or a glass material or organic material having a transmittance of light having a wavelength of 425 nm of 30% or less is preferably used. In addition, when the photochromic optical article is required to be used as a spectacle lens for power correction, a high-refractive index glass material or organic material having a refractive index of 1.7 or more is preferred from the viewpoint of thinning and weight reduction.

Specific examples of a combination when used as a spectacle lens include a combination in which a typical glass is used as the optical article plate on the outer side, and one having at least one property selected from a high-refractive index glass material or organic material having a refractive index of 1.7 or more, a glass or organic material having a blue light cutting performance, an ultraviolet absorption performance glass or organic material having a transmittance at 400 nm of 50% or less, and an organic material or chemically strengthened glass is used as the optical article plate on the inner side.

When the optical article plate on the outer side is an organic material or chemically strengthened glass, there is exemplified a combination with, as the optical article plate on the inner side, one having at least one property selected from a high-refractive index glass material or organic material having a refractive index of 1.7 or more, an ultraviolet absorption performance glass or organic material having a transmittance at 400 nm of 50% or less, and a typical glass. In addition, as the pair of optical article plates, there is also exemplified a combination of an inorganic material on one side with an organic material on the other side. In this case, a photochromic optical article in which an adhesive layer and an organic material are laminated can also be given excluding the inorganic material portion of the resulting photochromic optical article.

When excluding the inorganic material portion, it is preferred that the surface of the inorganic material to be brought into contact with the adhesive layer is subjected to a release treatment in advance.

The thickness of the optical article plate is not particularly restricted, and it may be appropriately selected according to the purpose. For example, in the case of an application for non-prescription sunglasses or the like, an optical article plate having a thickness of 1.5 mm or less can be used, and from the viewpoint of weight reduction, an optical article plate having a thickness of 1.0 mm or less is preferably used. In addition, when a prescription lens for myopia is produced, for example, it is suitable that the thickness of the center of the optical article plate on the outer side is 1.0 mm or less and that the thickness of at least a part of the optical article plate on the inner side is thicker than 1.0 mm, and an optical article plate having an appropriate thickness of about 10 to 20 mm can also be used. In addition, when a prescription lens for hyperopia is produced, for example, it is suitable that the thickness of the center of the optical article plate on the outer side is 20 mm or less and that the thickness of at least a part of the optical article plate on the inner side is thicker than 1.0 mm, and an optical article plate having an appropriate thickness of about 10 to 20 mm can also be used. Even when a bifocal lens, a progressive lens, or the like is produced, the thickness of the optical article plate to be appropriately used can be selected in the same manner as mentioned above. When a prescription lens is produced, the concave side of the optical article plate on the inner side is ground as the need arises, whereby it becomes possible to adjust the power according to the eyesight of a user.

Above all, the photochromic optical article according to the present invention exhibits excellent effects when the thickness of at least one of the optical article plates is 1.5 mm or less, and especially 1.0 mm or less. A lower limit of the thickness of the optical article plate is, for example, 0.1 mm. In the photochromic optical article of the present invention, the thickness of at least one of the optical article plates is preferably 0.1 to 1.5 mm, and more preferably 0.5 to 1.0 mm. When the thickness of one of the optical article plates is 0.1 to 1.5 mm, the other optical article plate may have the same thickness or may have a different thickness, and when the other optical article plate has a different thickness, the thickness thereof is not particularly restricted, and it may be 10 to 20 mm.

The shape of the optical article plate is not particularly restricted, and an optical article plate having a shape (such as a planar surface shape and a curved surface shape) according to a desired application may be used. However, in the case of using an optical article plate in a curved surface shape, when bonding is performed using plates having the same curvature radius of the bonded surface, the thickness of an end portion is in general thicker than the thickness of the center. In consequence, in the case of using an optical article plate in a curved surface shape, it is preferred to use a pair of optical article plates in a curved surface shape as optically designed such that the thickness of the adhesive layer on the concentric circle from the center is uniform.

[Thickness of Adhesive Layer]

In the photochromic optical article according to the present invention, the photochromic compound dispersed in the adhesive layer exhibits excellent photochromic properties. Accordingly, even when the adhesive layer is thin, it is able to exhibit excellent effects.

Taking into consideration operability and excellent effects, the thickness of the adhesive layer is preferably 0.02 to 0.8 mm, more preferably 0.03 to 0.5 mm, and still more preferably 0.05 to 0.2 mm. By regulating the thickness of the adhesive layer to 0.02 mm or more, there is a tendency that the adhesion is improved, the thickness of the film readily becomes uniform, and uneven density at the time of color development is suppressed. In addition, by regulating the thickness of the adhesive layer to 0.8 mm or less, there is a tendency that it is possible to suppress reduction of the durability to be caused due to degradation from an end portion. For example, when the photochromic optical article according to the present invention is used as sunglasses, though it is necessary to keep the thickness of the optical article plate at about 0.1 to 1.5 mm from the viewpoint of strength, in order to suppress the total thickness of the photochromic optical article from the viewpoint of design, the thickness of the adhesive layer is preferably 0.8 mm or less.

[Total Thickness of Photochromic Optical Article]

The photochromic optical article according to the present invention is one formed by bonding together the pair of optical article plates with the adhesive layer, and a preferred total thickness of the photochromic optical article obtained from this configuration varies with the purpose thereof. For example, in a spectacle lens application, the preferred total thickness is different between a non-prescription sunglasses application and a prescription lens application.

When the photochromic optical article according to the present invention is used as a spectacle lens, the optical article plate on the side (inner side) close to an eye and the optical article plate on the side (outer side) which is far from the eye and to which more sunlight is applied outdoors are combined together.

In the case of the non-prescription sunglasses application, the thicknesses of the optical article plates on the outer and inner sides are preferably 1.5 mm or less, and more preferably 1.0 mm or less, respectively. In addition, the thickness of the adhesive layer is preferably 0.8 mm or less, and more preferably 0.05 to 0.2 mm. In consequence, in the case of the non-prescription sunglasses application, the total thickness of the photochromic optical article is preferably 3.8 mm or less, and more preferably 2.2 mm or less.

In the case of the prescription lens application, the thickness of the optical article plate on the outer side is preferably 1.5 mm or less, and more preferably 1.0 mm or less. On the other hand, as the optical article plate on the inner side, an optical article plate having an appropriate thickness of about 10 to 20 mm may be used, and its concave surface may be ground and used according to the eyesight of the user. In addition, the thickness of the adhesive layer is preferably 0.8 mm or less, and more preferably 0.05 to 0.2 mm. In consequence, in the case of the prescription lens application, the total thickness of the photochromic optical article is preferably 22.3 mm or less, and more preferably 11.2 mm or less. However, in the case of the prescription lens application, the final center thickness of the photochromic optical article after being ground is preferably 2.5 mm or less.

[Adhesive Layer]

The adhesive layer of the photochromic optical article according to the present invention is an adhesive layer containing a photochromic compound and a resin selected from a urethane resin, an epoxy resin, and an acrylic resin. The resin to be used for the adhesive layer, which is selected from a urethane resin, an epoxy resin, and an acrylic resin, is not particularly restricted, and known resins may be used. Of these, an adhesive layer containing a photochromic compound and a urethane resin is suitable.

An adhesive layer resulting from curing a photochromic adhesive composition containing a photochromic compound and at least one curable compound selected from a polyiso(thio)cyanate/poly(thi)ol mixture, an epoxy compound, and an acrylic compound is suitable. In addition, the polyiso(thio)cyanate/poly(thi)ol mixture is suitably a mixture containing a polyiso(thio)cyanate compound having two or more iso(thio)cyanate groups in a molecule thereof and a poly(thi)ol compound having two or more active hydrogen-containing groups selected from a hydroxy group and a thiol group in a molecule thereof. The photochromic adhesive composition is hereunder described in detail.

[Photochromic Adhesive Composition]

As mentioned above, the photochromic adhesive composition according to the present invention is a photochromic adhesive composition comprising a photochromic compound and at least one curable compound selected from a polyiso(thio)cyanate/poly(thi)ol mixture, an epoxy compound, and an acrylic compound. When the polyiso(thio)cyanate/poly(thi)ol mixture is cured, a urethane resin is formed, when the epoxy compound is cured, an epoxy resin is formed, and when the acrylic compound is cured, an acrylic resin is formed.

Above all, the polyiso(thio)cyanate/poly(thi)ol mixture is suitably a mixture containing a polyiso(thio)cyanate compound having two or more iso(thio)cyanate groups in a molecule thereof and a poly(thi)ol compound having two or more active hydrogen-containing groups selected from a hydroxy group and a thiol group in a molecule thereof. Detailed description is made as follows.

That is, the aforementioned suitable photochromic adhesive composition contains

(A) a photochromic compound (hereinafter also referred to as "component (A)");
(B1) a polyiso(thio)cyanate compound having two or more iso(thio)cyanate groups in a molecule thereof (hereinafter also referred to as "component (B1)" or "polyiso(thio)cyanate compound (B1)"); and
(B2) a poly(thi)ol compound having two or more active hydrogen-containing groups selected from a hydroxy group and a thiol group in a molecule thereof (hereinafter also referred to as "component (B2)" or "poly(thi)ol compound (B2)").

It is also preferred that the photochromic adhesive composition contains, in addition to the component (A), the component (B1), and the component (B2), (B3) a mono(thi)ol compound having one active hydrogen-containing group selected from a hydroxy group and a thiol group in a molecule thereof (hereinafter also referred to simply as "component (B3)" or "mono(thi)ol compound (B3)" and/or (B4) a polyrotaxane monomer having a complex molecular structure formed of an axis molecule and a plurality of cyclic molecules including the axis molecule, the cyclic molecule having an iso(thio)cyanate group or an active hydrogen-containing group selected from a hydroxy group and a thiol group (hereinafter also referred to as "component (B4)" or "polyrotaxane monomer (B4)"), the component (B3) and/or the component (B4) being optionally blended (the "component (B1)" and the "component (B2)" and also the "component (B3)" and/or the "component (B4)" to be optionally blended will be also generically named as "component (B)").

In this specification, the "iso(thio)cyanate group" means both an "isocyanate group" and an "isothiocyanate group".

The wording "having two or more iso(thio)cyanate groups in a molecule thereof" means "having two or more isocyanate groups in a molecule thereof", "having two or more isothiocyanate groups in a molecule thereof", or "having an isocyanate group and an isothiocyanate group in a molecule thereof, the total of those groups being two or more".

In addition, the wording "having two or more active hydrogen-containing groups selected from a hydroxy group

and a thiol group in a molecule thereof" means "having two or more hydroxy groups in a molecule thereof", "having two or more thiol groups in a molecule thereof", or "having a hydroxy group and a thiol group in a molecule thereof, the total of those groups being two or more".

The term "(thi)ol" means both "ol (OH)" and "thiol (SH)".

A method for manufacturing the photochromic adhesive component is not particularly restricted, and the respective components may be mixed by a known method. The respective components are hereunder described.

(Photochromic Compound (A))

As the photochromic compound, for example, a fulgide compound, a chromene compound, a spirooxazine compound, and the like are known, and in the present invention, these photochromic compounds can be used without any restrictions. These may be used alone or may be used in combination of two or more thereof. Examples of the fulgide compound, the chromene compound, and the spirooxazine compound include compounds described in JP 2-28154 A, JP 62-288830 A, WO 94/22850 A, WO 96/14596 A, and so on.

Above all, as the compound exhibiting an excellent photochromic action, for example, chromene compounds disclosed in JP 2001-114775 A, JP 2001-031670 A, JP 2001-011067 A, JP 2001-011066 A, JP 2000-347346 A, JP 2000-344762 A, JP 2000-344761 A, JP 2000-327676 A, JP 2000-327675 A, JP 2000-256347 A, JP 2000-229976 A, JP 2000-229975 A, JP 2000-229974 A, JP 2000-229973 A, JP 2000-229972 A, JP 2000-219687 A, JP 2000-219686 A, JP 2000-219685 A, JP 11-322739 A, JP 11-286484 A, JP 11-279171 A, JP 10-298176 A, JP 09-218301 A, JP 09-124645 A, JP 08-295690 A, JP 08-176139 A, JP 08-157467 A, U.S. Patent. No. 5,645,767, U.S. Patent. No. 5,658,501, U.S. Patent No. 5,961,892, U.S. Patent No. 6,296,785, Japanese Patent No. 4424981, Japanese Patent No. 4424962, WO 2009/136668 A, WO 2008/023828 A, Japanese Patent No. 4369754, Japanese Patent No. 4301621, Japanese Patent No. 4256985, WO 2007/086532 A, JP 2009-120536 A, JP 2009-67754 A, JP 2009-67680 A, JP 2009-57300 A, Japanese Patent No. 4195615, Japanese Patent No. 4158881, Japanese Patent No. 4157245, Japanese Patent No. 4157239, Japanese Patent No. 4157227, Japanese Patent No. 4118458, JP 2008-74832, Japanese Patent No. 3982770, Japanese Patent No. 3801386 A, WO 2005/028465 A, WO 2003/042203 A, JP 2005-289812 A, JP 2005-289870 A, JP 2005-112772 A, Japanese Patent No. 3522189, WO 2002/090342 A, Japanese Patent No. 3471073, JP 2003-277381 A, WO 2001/060811 A, WO 2000/071544 A, WO 2005/028465 A, WO 2011/16582 A, WO 2011/034202 A, WO 2012/121414 A, WO 2013/042800 A, Japanese Patent No. 6031035, and so on can be suitably used.

In general, the chromene compound can be represented by the following general formula (1).

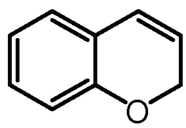

(1)

The chromene compound having the structure represented by the general formula (1) is not particularly restricted in terms of a substituent thereof, and it may have a known substituent.

Among the aforementioned chromene compounds, a chromene compound having an indeno(2,1-f)naphtho(1,2-b)pyran structure represented by the following general formula (2) is more preferred from the viewpoint of photochromic properties, such as color development density, initial coloration, durability, and fading rate.

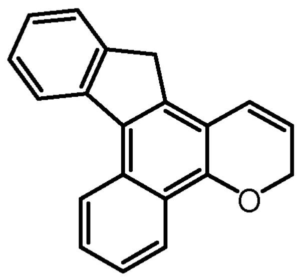

(2)

The chromene compound having the structure represented by the general formula (2) is also not particularly restricted in terms of a substituent thereof, and it may have a known substituent.

Examples of the photochromic compound which can be used in the present invention include those shown below, but it should be construed that the present invention is not limited to the following compounds.

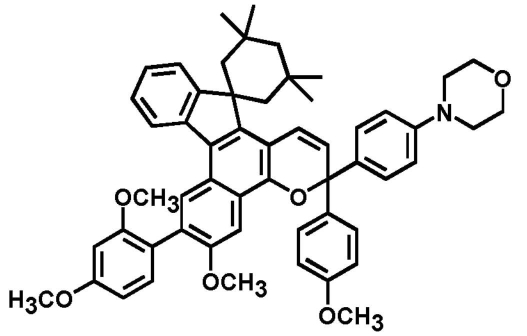

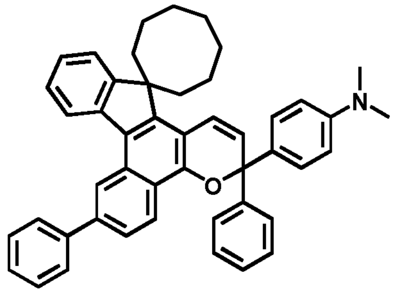

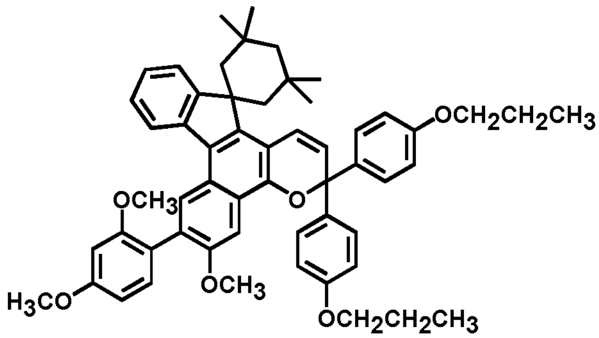

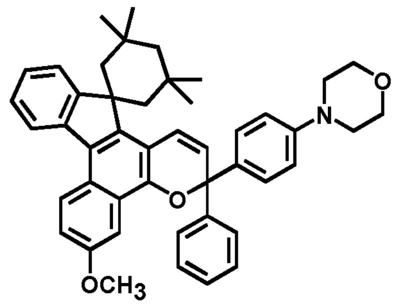

As the component (A), among photochromic compounds having a long-chain substituent having a molecular weight of 300 or more, in particular, a substituent having a molecular chain, such as a polysiloxane chain, a polyoxyalkylene chain, a polyester chain, and a polyester polyether chain, an arbitrary compound can be appropriately selected and used. Since the molecular chain having a molecular weight of 300 or greater has a high molecular weight, when manufacturing the photochromic compound, it occasionally becomes one having plural kinds of molecular chains but not a single kind of molecular chain. In that case, the molecular weight of the foregoing molecular chains may fall within the above-prescribed range in terms of an average value (number average molecular weight) of the plural molecular chains. This molecular weight can be confirmed with the type of raw materials at the time of manufacturing the photochromic compound, and can also be confirmed from a product by a known means, such as NMR, IR, and mass analysis.

It may be considered that in view of the fact that the photochromic compound has a molecular chain having a molecular weight of 300 or more, even in the adhesive layer in the present invention, high photochromic properties can be exhibited. Taking into consideration the photochromic properties, the blending amount of the photochromic compound, and the productivity of the photochromic compound itself, the molecular weight of the molecular chain is preferably 300 to 25,000, more preferably 400 to 20,000, still more preferably 440 to 15,000, and yet still more preferably 500 to 10,000.

In the case where the photochromic compound has a molecular chain having a molecular weight of 300 or more, the number of the foregoing molecular chains is preferably 0.5 or more per molecule of the photochromic compound. That is, even in the case where the number of the foregoing molecular chains is the lowest, a structure in which two photochromic compounds are bonded together with the molecular chain is preferred. Taking into consideration a good balance with the molecular weight of the molecular chain, the photochromic properties, and the like, an upper limit of the number of molecular chains is preferably 4 or less, more preferably 2 or less, and still more preferably 1.

The photochromic compound is preferably one in which in the molecular structure exhibiting the photochromic properties, a part of the molecule is cleaved upon irradiation with light to develop a color, and the cleaved part is recombined and faded. In consequence, in order that the photochromic compound may reversibly repeat color development and fading, the existence of a free space in which the movement of the molecule is not prevented on the occasion when cleaving and recombination occur (degree of freedom of molecule) is important. It may be considered that in the case of a compound having such a molecular structure, in particular, the effect of the foregoing molecular chain is exhibited.

Examples of the photochromic compound having a molecular chain having a molecular weight of 300 or more include compounds described in WO 2000/015630 A, WO 2004/041961 A, WO 2005/105874 A, WO 2005/105875 A, WO 2006/022825 A, WO 2009/146509 A, WO 2010/20770 A, WO 2012/121414 A, WO 2012/149599 A, WO 2012/162725 A, WO 2012/176918 A, WO 2013/078086 A, WO 2019/013249 A, Japanese Patent Application No. 2018-079303, Japanese Patent Application No. 2018-136374, and so on.

In the present invention, the photochromic compound having a molecular chain having a molecular weight of 300 or more is suitably at least one photochromic compound selected from those represented by the following formulae

(3) and (4).

PC-(L-Chain) (3)

PC-(L-Chain-L')-PC' (4)

In the formula (3) or (4),

L and L' are each at least one divalent organic group selected from a polyoxyalkylene chain, a (thio)ester group, and a (thio)amide group, and L and L' may be the same as or different from each other;
Chain is a monovalent or divalent organic group containing at least one chain selected from a polyalkylene oxide group, a polyester chain, a polyester polyether chain, and a polysiloxane chain; and
the total molecular weight of L and Chain, or L, L', and Chain is corresponding to the aforementioned molecular weight. That is, the portion of L and Chain, or L, L', and Chain is corresponding to the molecular chain.

In the formula (3) or formula (4),
PC and PC' are each selected from compounds having basic skeletons represented by the following formulae (5) to (9).

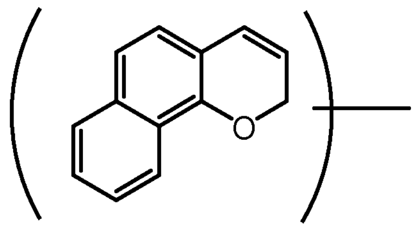

(5)

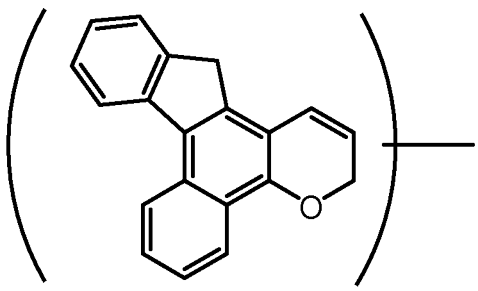

(6)

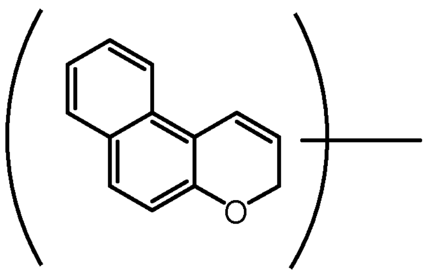

(7)

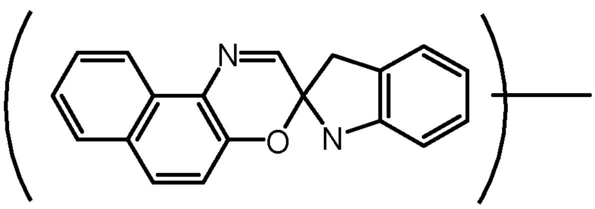

(8)

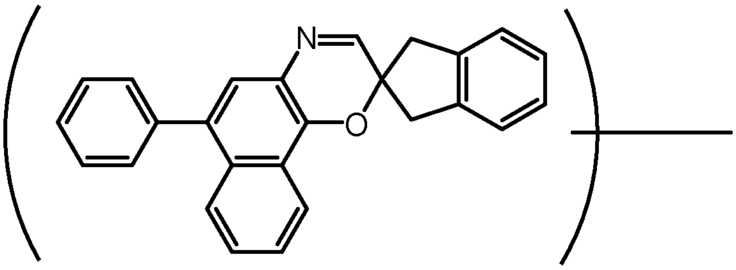

(9)

In the formulae (5) to (9), the molecular structure in each parenthesis is a basic skeleton of PC or PC', and the line expresses that it is bonded to L or L'.

In the basic skeletons represented by the formulae (5) to (9), with respect to the carbon atom or nitrogen atom capable of having a substituent, one atom may be bonded directly to L or L' that is the divalent organic group, and the other atom may have another substituent; or with respect to the carbon atom or nitrogen atom capable of having a substituent, one atom may be bonded to L or L' that is the divalent organic group through the substituent, and the other atom may have another substituent.

Next, suitable basic skeletons of the formulae (5) to (9) are described.

<Basic Skeleton Represented by Formula (5') (Suitable Basic Skeleton of Formula (5))>

In the basic skeleton represented by the formula (5), a preferred basic skeleton is a structure represented by the following formula (5').

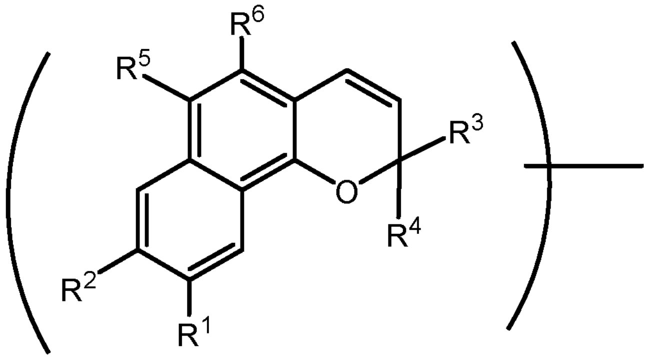

( 5' )

In the formula (5'), the molecular structure in the parenthesis is a basic skeleton of PC or PC', and the line expresses that it is bonded to L or L'.

In the formula (5'), examples of each of $R^1$ and $R^2$ include a hydrogen atom, a hydroxy group, an alkyl group having 1 to 6 carbon atoms, a haloalkyl group having 1 to 6 carbon atoms, an optionally substituted cycloalkyl group having 3 to 8 carbon atoms, an alkoxy group having 1 to 6 carbon atoms, an amino group, a substituted amino group, an optionally substituted heterocyclic group, a cyano group, a halogen atom, an alkylthio group having 1 to 6 carbon atoms, an optionally substituted arylthio group having 6 to 10 carbon atoms, a nitro group, a formyl group, a hydroxycarbonyl group, an alkylcarbonyl group having 2 to 7 carbon atoms, an alkoxycarbonyl group having 2 to 7 carbon atoms, an optionally substituted aralkyl group having 7 to 11 carbon atoms, an optionally substituted aralkoxy group having 7 to 11 carbon atoms, an optionally substituted aryloxy group having 6 to 12 carbon atoms, an optionally substituted aryl group having 6 to 12 carbon atoms, an optionally substituted heteroaryl group having 3 to 12 carbon atoms, a thiol group, an alkoxyalkylthio group having 2 to 9 carbon atoms, a haloalkylthio group having 1 to 6 carbon atoms, and an optionally substituted cycloalkylthio group having 3 to 8 carbon atoms.

In the formula (5'), $R^3$ and $R^4$ are each a hydrogen atom, an optionally substituted aryl group having 6 to 20 carbon atoms, or an optionally substituted heteroaryl group having 3 to 20 carbon atoms.

Examples of the substituent which the foregoing aryl group or heteroaryl group has include substituents selected from a hydroxy group, an alkyl group having 1 to 6 carbon atoms, a haloalkyl group having 1 to 6 carbon atoms, a cycloalkyl group having 3 to 8 carbon atoms, an alkoxy group having 1 to 6 carbon atoms, an amino group, a heterocyclic group, a cyano group, a halogen atom, an alkylthio group having 1 to 6 carbon atoms, an optionally substituted arylthio group having 6 to 10 carbon atoms, a hydroxy group, an alkyl group, a haloalkyl group, a cycloalkyl group, an alkoxy group, an amino group, a substituted amino group, an optionally substituted heterocyclic group, a cyano group, a nitro

group, and a halogen atom.

In the formula (5'), examples of each of $R^5$ and $R^6$ include a hydrogen atom, a halogen atom, a carboxy group, an acetyl group, an alkyl group having 1 to 10 carbon atoms, an alkenyl group having 2 to 10 carbon atoms, an alkoxy group having 1 to 10 carbon atoms, a hydroxyalkyl group having 1 to 10 carbon atoms, an alkyl group having 1 to 10 carbon atoms, which is substituted with an alkoxy group having 1 to 10 carbon atoms, an aminoalkyl group having 1 to 10 carbon atoms, a cycloalkyl group having 3 to 20 carbon atoms, an optionally substituted aryl group having 6 to 20 carbon atoms, and an optionally substituted heteroaryl group having 3 to 20 carbon atoms.

In the basic skeleton represented by the formula (5'), the aforementioned -(L-Chain) or -(L-Chain-L')- molecular chain is able to be bonded to the basic skeleton while allowing any one of $R^1$ to $R^6$ to serve as a bond. The wording "$R^1$ to $R^6$" is one collectively expressing $R^1$, $R^2$, $R^3$, $R^4$, $R^5$, and $R^6$. In the following exemplifications regarding groups, the case of using the wording "to" shall follow this.

It can also be bonded to the molecular chain through one group of $R^1$ to $R^6$ (provided that a hydrogen atom is excluded). Furthermore, it can also be bonded to the molecular chain through the substituent which one of $R^1$ to $R^6$ has.

Above all, taking into consideration the color development density and the developed color tone of the obtained photochromic compound, in the formula (5'), suitable $R^1$ to $R^6$ are as follows.

$R^1$ and $R^2$ are suitably a hydrogen atom, the aforementioned alkyl group, the aforementioned alkoxy group, the aforementioned heterocyclic group, the aforementioned aryl group, or the aforementioned arylthio group. $R^3$ and $R^4$ are suitably the aforementioned alkyl group, the aforementioned alkoxy group, the aforementioned substituted amino group, or the aforementioned heterocyclic group. $R^5$ and $R^6$ are suitably the aforementioned alkyl group, the aforementioned alkenyl group, the aforementioned alkoxy group, the aforementioned aryl group, or the aforementioned heteroaryl group. The aforementioned molecular chain is preferably bonded to any of $R^3$ to $R^6$ directly or through the substituent.

<Basic Skeleton Represented by Formula (6') (Suitable Basic Skeleton of Formula (6))>

In the basic skeleton represented by the formula (6), a preferred basic skeleton is a structure represented by the following formula (6').

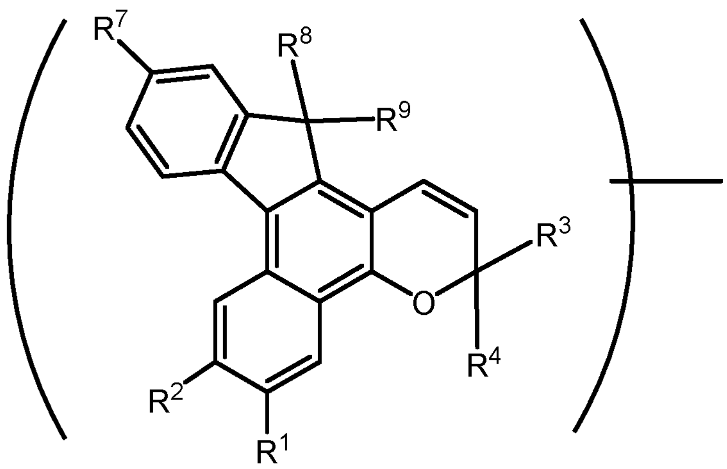

( 6' )

In the formula (6'), the molecular structure in the parenthesis is a basic skeleton of PC or PC', and the line expresses that it is bonded to L or L'.

In the formula (6'), examples of $R^1$ to $R^4$ include the same groups as those described above for $R^1$ to $R^4$ in the formula (5').

In the formula (6'), examples of $R^7$ include the same groups as those described above for $R^1$ to $R^2$ in the formula (5').

In the formula (6'), $R^8$ and $R^9$ are each a hydrogen atom, a hydroxy group, an alkyl group having 1 to 6 carbon atoms, a haloalkyl group having 1 to 6 carbon atoms, an optionally substituted cycloalkyl group having 3 to 8 carbon atoms, an alkoxy group having 1 to 6 carbon atoms, an amino group, a substituted amino group, an optionally substituted heterocyclic group, a cyano group, a nitro group, an alkoxyalkyl group having 1 to 6 carbon atoms, a formyl group, a hydroxycarbonyl group, an alkylcarbonyl group having 2 to 7 carbon atoms, an alkoxycarbonyl group having 2 to 7 carbon atoms, a halogen atom, an optionally substituted aralkyl group having 7 to 11 carbon atoms, an optionally substituted aralkoxy group having 7 to 11 carbon atoms, an optionally substituted aryl group having 6 to 12 carbon atoms, a thiol group, an alkylthio group having 1 to 6 carbon atoms, a cycloalkylthio group having 3 to 8 carbon atoms, or an optionally substituted arylthio group having 6 to 10 carbon atoms.

In the formula (6'), $R^8$ and $R^9$ may be taken together to form an aliphatic ring having 3 to 20 ring member carbon atoms, a fused polycyclic ring in which an aromatic ring or an aromatic heterocyclic ring is fused with the aforementioned aliphatic ring, a heterocyclic ring having 3 to 20 ring member carbon atoms, or a fused polycyclic ring in which an aromatic ring or an aromatic heterocyclic ring is fused with the aforementioned heterocyclic ring, along with the carbon atom at the 13-position to which $R^8$ and $R^9$ are bonded, and these rings may have a substituent.

In the basic skeleton represented by the formula (6'), the aforementioned -(L-Chain) or -(L-Chain-L')- molecular chain is able to be bonded to the basic skeleton while allowing any one of $R^1$ to $R^4$ and $R^7$ to $R^9$ to serve as a bond.

It can also be bonded to the molecular chain through one group of $R^1$ to $R^4$ and $R^7$ to $R^9$ (provided that a hydrogen atom is excluded). Furthermore, it can also be bonded to the molecular chain through the substituent which one of $R^1$ to $R^4$ and $R^7$ to $R^9$ has.

Above all, in the formula (6'), suitable $R^1$ to $R^4$ and $R^7$ to $R^9$ are as follows.

$R^1$, $R^2$, $R^3$, and $R^4$ are suitably the same as the suitable groups expressed in the formula (5'); $R^7$ is suitably a hydrogen atom, the aforementioned alkoxy group, the aforementioned heterocyclic group, or the aforementioned aryl group; and $R^8$ and $R^9$ are suitably the aforementioned hydroxy group, the aforementioned alkyl group, the aforementioned alkoxy group, or the case where $R^8$ and $R^9$ form a ring with the carbon atom at the 13-position to which $R^8$ and $R^9$ are bonded. The aforementioned molecular chain is preferably bonded to any of $R^3$ to $R^4$ and $R^7$ to $R^9$ directly or through the substituent.

<Basic Skeleton Represented by Formula (7') (Suitable Basic Skeleton of Formula (7))>

In the basic skeleton represented by the formula (7), a preferred basic skeleton is a structure represented by the following formula (7').

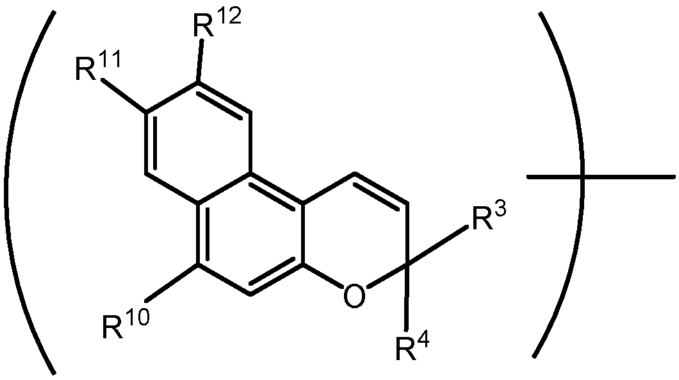

(7')

In the formula (7'), the molecular structure in the parenthesis is a basic skeleton of PC or PC', and the line expresses that it is bonded to L or L'.

In the formula (7'), examples of $R^3$ to $R^4$ include the same groups as those described above for $R^3$ to $R^4$ in the formula (5').

In the formula (7'), examples of $R^{10}$ to $R^{12}$ include the same groups as those described above for $R^1$ to $R^2$ in the formula (5').

In the basic skeleton represented by the formula (7'), the aforementioned -(L-Chain) or -(L-Chain-L')- molecular chain is able to be bonded to the basic skeleton while allowing any one of $R^3$ to $R^4$ and $R^{10}$ to $R^{12}$ to serve as a bond.

It can also be bonded to the molecular chain through one group of $R^3$ to $R^4$ and $R^{10}$ to $R^{12}$ (provided that a hydrogen atom is excluded). Furthermore, it can also be bonded to the molecular chain through the substituent which one of $R^3$ to $R^4$ and $R^{10}$ to $R^{12}$ has.

<Basic Skeleton Represented by Formula (8') (Suitable Basic Skeleton of Formula (8))>

In the basic skeleton represented by the formula (8), a preferred basic skeleton is a structure represented by the following formula (8').

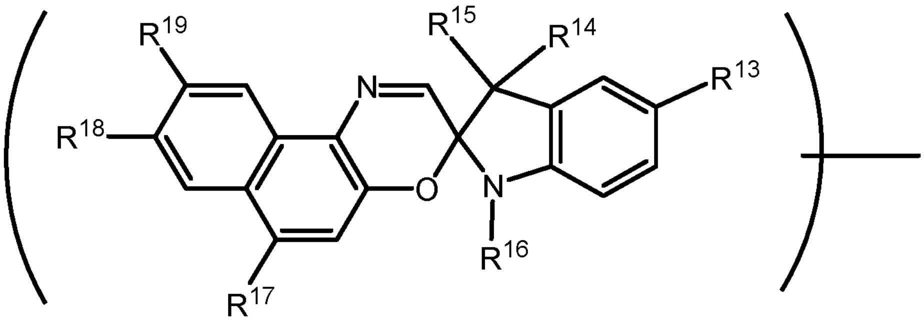

( 8' )

In the formula (8'), the molecular structure in the parenthesis is a basic skeleton of PC or PC', and the line expresses that it is bonded to L or L'.

In the formula (8'), examples of $R^{13}$, $R^{17}$, $R^{18}$, and $R^{19}$ include the same groups as those described above for $R^1$ to $R^2$ in the formula (5').

In the formula (8'), examples of $R^{16}$ include a hydrogen atom, a halogen atom, an alkyl group having 1 to 20 carbon atoms, a haloalkyl group having 1 to 5 carbon atoms, a dihaloalkyl group having 1 to 5 carbon atoms, a trihaloalkyl group having 1 to 5 carbon atoms, an optionally substituted cycloalkyl group having 3 to 20 carbon atoms, an optionally substituted bicycloalkyl group having 6 to 20 carbon atoms, or an optionally substituted aryl group having 6 to 20 carbon atoms.

In the formula (8'), examples of $R^{14}$ and $R^{15}$ include a hydrogen atom, a halogen atom, an alkyl group having 1 to 10 carbon atoms, and an optionally substituted cycloalkyl group having 3 to 20 carbon atoms.

In the basic skeleton represented by the formula (8'), the aforementioned -(L-Chain) or -(L-Chain-L')- molecular chain is able to be bonded to the basic skeleton while allowing any one of $R^{13}$ to $R^{19}$ to serve as a bond.

It can also be bonded to the molecular chain through one group of $R^{13}$ to $R^{19}$ (provided that a hydrogen atom is excluded). Furthermore, it can also be bonded to the molecular chain through the substituent which one of $R^{13}$ to $R^{19}$ has.

<Basic Skeleton Represented by Formula (9') (Suitable Basic Skeleton of Formula (9))>

In the basic skeleton represented by the formula (9), a preferred basic skeleton is a structure represented by the following formula (9').

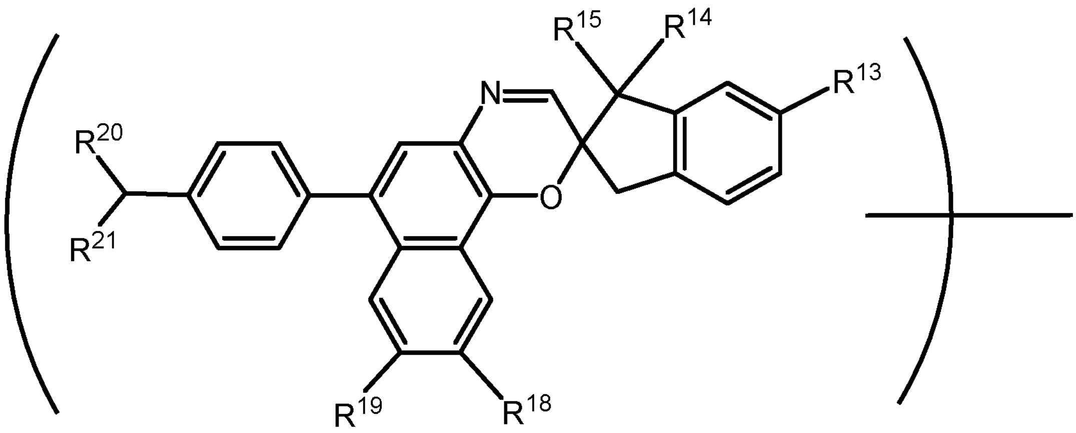

( 9' )

In the formula (9'), the molecular structure in the parenthesis is a basic skeleton of PC or PC', and the line expresses that it is bonded to L or L'.

In the formula (9'), examples of $R^{13}$, $R^{18}$, and $R^{19}$ include the same groups as those described above for $R^1$ to $R^2$ in the formula (5').

In the formula (9'), examples of $R^{14}$, $R^{15}$, $R^{20}$, and $R^{21}$ include the same groups as those described above for $R^{14}$ to $R^{15}$ in the formula (8').

In the basic skeleton represented by the formula (9'), the aforementioned -(L-Chain) or -(L-Chain-L')- molecular chain is able to be bonded to the basic skeleton while allowing any one of $R^{13}$ to $R^{15}$ and $R^{18}$ to $R^{21}$ to serve as a bond.

It can also be bonded to the molecular chain through one group of $R^{13}$ to $R^{15}$ and $R^{18}$ to $R^{21}$ (provided that a hydrogen atom is excluded). Furthermore, it can also be bonded to the molecular chain through the substituent which

one of $R^{13}$ to $R^{15}$ and $R^{18}$ to $R^{21}$ has.

In the formula (3) or formula (4), L or L' is a divalent bonding group containing at least one group selected from a polyoxyalkylene chain, a (thio)ester group, and a (thio)amide group as mentioned above, and more specifically, it is preferably a divalent organic group represented by the following formula (10).

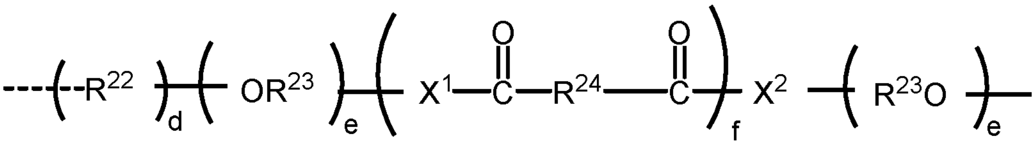 (10)

In the formula,

$R^{22}$ is a divalent group and is a linear or branched alkylene group having 1 to 20 carbon atoms, an optionally substituted cycloalkyl group having 3 to 12 ring-forming carbon atoms, an optionally substituted aryl group having 6 to 12 ring-forming carbon atoms, or an optionally substituted heterocyclic group having 3 to 12 ring-forming atoms;
$R^{23}$ is a divalent group and is a linear or branched alkylene group having 1 to 20 carbon atoms, an optionally substituted cycloalkyl group having 3 to 12 ring-forming carbon atoms, or an optionally substituted aryl group having 6 to 12 ring-forming carbon atoms;
$R^{24}$ is a divalent group and is a linear or branched alkylene group having 1 to 20 carbon atoms, an optionally substituted cycloalkyl group having 3 to 12 ring-forming carbon atoms, or an optionally substituted aryl group having 6 to 12 ring-forming carbon atoms;
$X^1$ and $X^2$ are a divalent group and are each independently a direct bond, O, S, an amino group, a substituted amino group, a (thio)amide group, or a (thio)ester group;
d is an integer of 0 to 50, e is an integer of 0 to 50, and f is an integer of 0 to 50;
when d is 2 or more, then plural $R^{22}$'s may be the same as or different from each other;
when e is 2 or more, then plural divalent groups of the unit e may be the same as or different from each other;
when f is 2 or more, then plural divalent groups of the unit f may be the same as or different from each other; and
L and L' may be the same as or different from each other, and the dotted line part expresses a bond to the photochromic moiety.

Preferred examples of the divalent organic group represented by the formula (10) include the following divalent groups.

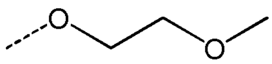

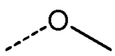

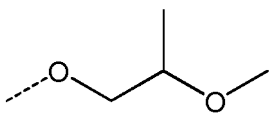

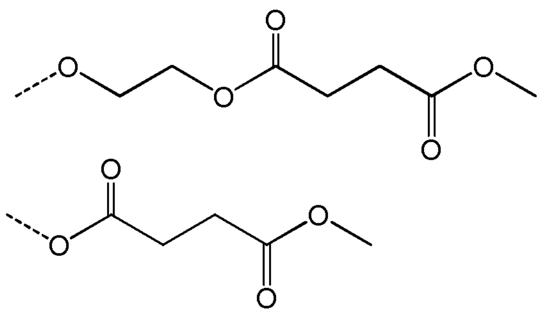

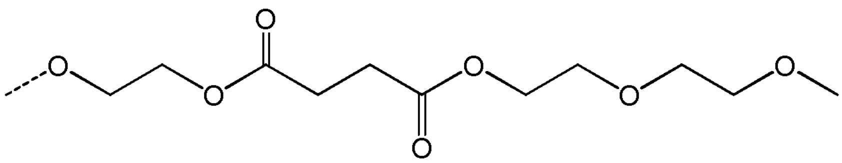

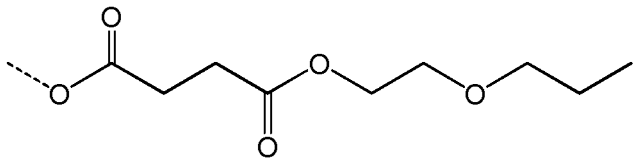

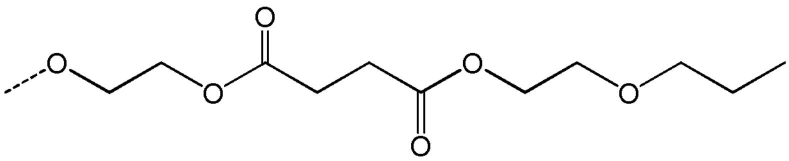

In the formula (3) and formula (4), Chain is a monovalent or divalent group containing at least one chain selected from a polyalkylene oxide chain, a polyester chain, a polyester polyether chain, and a polysiloxane chain, and above all, chains having repeating units represented by the following formulae (11a) to (11d) are preferred.

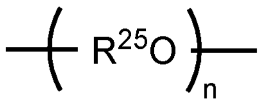
(11a)

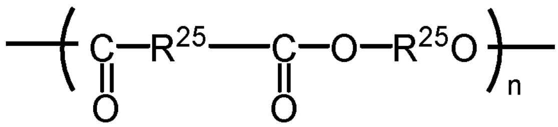
(11b)

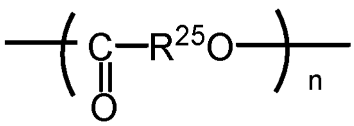
(11c)

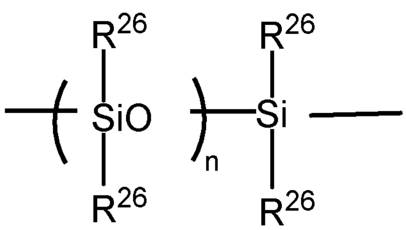
(11d)

In the formulae (11a) to (11c),

$R^{25}$ is a linear or branched alkylene group having 1 to 20 carbon atoms, and when plural $R^{25}$'s are contained in the same molecule, then $R^{25}$'s may be the same or different from each other; and
n indicates a repeating unit and is an integer of 3 to 200, and the plural divalent groups of repeating units may be the same as or different from each other.

In the formula (11d),

$R^{26}$ is a linear or branched alkyl group having 1 to 20 carbon atoms or an aryl group having 6 to 14 carbon atoms, and when plural $R^{26}$'s are contained in the same molecule, then $R^{26}$'s may be the same as or different from each other.

Examples of the chromene compound having a molecular chain having a molecular weight of 300 or more are given below, but it should be construed that the present invention is not limited thereto.

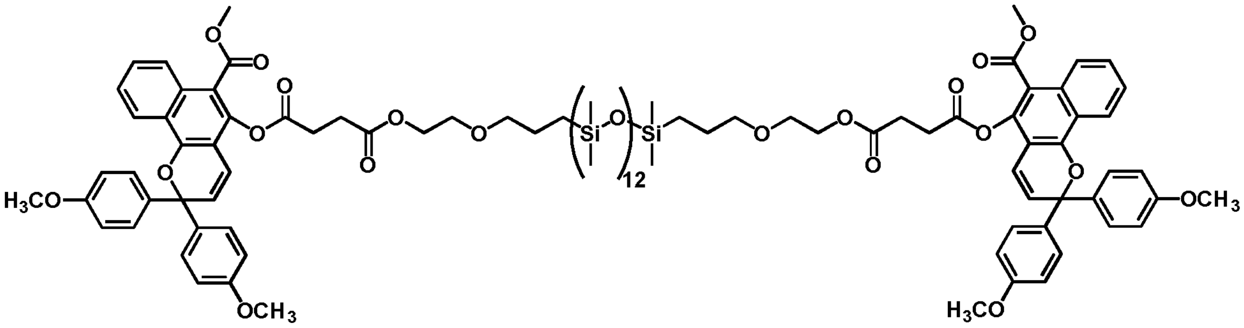

The blending ratio of the component (A) may be appropriately set up according to the purpose, and it is preferably 0.01 to 10 parts by mass, more preferably 0.05 to 5 parts by mass, and still more preferably 0.1 to 3 parts by mass relative to 100 parts by mass of the component (B) as mentioned later.

(Component (B))

[Polyiso(thio)cyanate Compound (B1)]

(Component (B1); Polyisocyanate Compound)

Examples of the polyisocyanate compound of the polyiso(thio)cyanate compound include an aliphatic isocyanate compound, an alicyclic isocyanate compound, an aromatic isocyanate compound, a sulfur-containing aliphatic isocyanate compound, an aliphatic sulfide-based isocyanate compound, an aromatic sulfide-based isocyanate compound, an aliphatic sulfone-based isocyanate compound, an aromatic sulfone-based isocyanate compound, a sulfonic acid ester-based isocyanate compound, an aromatic sulfonic acid amide-based isocyanate compound, and a sulfur-containing heterocyclic isocyanate compound.

Of these, examples of a compound having high adhesion between the pair of optical article plates and suitable for forming a photochromic optical article having excellent transparency and mechanical strength include compounds represented by the following formulae (I) to (VI).

(Component (B1); Following Formula (1) (Polyisocyanate Compound Having Alkylene Group))

$$OCN\text{-}R^{100}\text{-}NCO \qquad (I)$$

In the formula, $R^{100}$ represents an alkylene group having 1 to 10 carbon atoms, and a part of carbon atoms in the chain of the alkylene group may be substituted with a sulfur atom.

The alkylene group serving as $R^{100}$ may be linear or branched. Among the alkylene groups, a linear group which is a pentamethylene group, a hexamethylene group, a heptamethylene group, or an octamethylene group; and a branched group in which a part of hydrogen atoms in a pentamethylene group, a hexamethylene group, a heptamethylene group, or an octamethylene group is substituted with a methyl group are preferred. In addition, the alkylene group in which a part of carbon atoms is substituted with a sulfur atom is preferably $-CH_2CH_2SCH_2CH_2SCH_2CH_2-$.

Specific examples of the compound represented by the formula (I) include pentamethylene diisocyanate, hexamethylene diisocyanate, heptamethylene diisocyanate, octamethylene diisocyanate, 2,4,4-trimethylhexanemethylene diisocyanate, and 1,2-bis(2-isocyanatoethylthio)ethane. These compounds may be used alone or may be used in combination of two or more thereof.

(Component (B1); Following Formula (II) (Polyisocyanate Compound Having Benzene Ring) or Following Formula (III) (Polyisocyanate Compound Having Cyclohexane Ring))

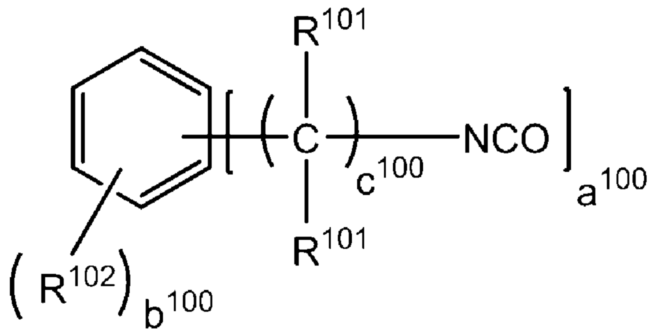

( II )

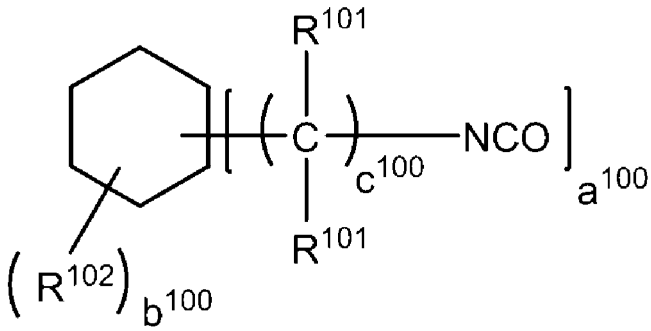

( III )

In the formulae, $R^{101}$'s each independently represent a hydrogen atom or an alkyl group having 1 to 4 carbon atoms; $R^{102}$ represents an alkyl group having 1 to 4 carbon atoms, and when plural groups are present, then they may be the same as or different from each other; $a^{100}$ represents 2 or 3; $b^{100}$ represents an integer of 0 to 4; and $c^{100}$ represents an integer of 0 to 4.

The compound represented by the formula (II) and the compound represented by the formula (III) differ from each other from the standpoint that the former is a compound having a benzene ring, whereas the latter is a compound having a cyclohexane ring.

The alkyl group serving as $R^{101}$ may be linear or branched. Above all, $R^{101}$ is preferably a hydrogen atom, a methyl group, or an ethyl group.

The alkyl group serving as $R^{102}$ may be linear or branched. Above all, $R^{102}$ is preferably a hydrogen atom, a methyl group, or an ethyl group.

Specific examples of the compound represented by the formula (II) or formula (III) include isophorone diisocyanate, xylene diisocyanate (o-, m-, p-), 2,4-tolylene diisocyanate, 2,6-tolylene diisocyanate, 1,4-bis(isocyanatomethyl)cyclohexane, and 1,3-bis(isocyanatomethyl)cyclohexane (mixture of isomers). These compounds may be used alone or may be used in combination of two or more thereof.

(Component (B1); Following Formula (IV) (Polyisocyanate Compound Having Two Benzene Rings) or Following Formula (V) (Polyisocyanate Compound Having Two Cyclohexane Rings))

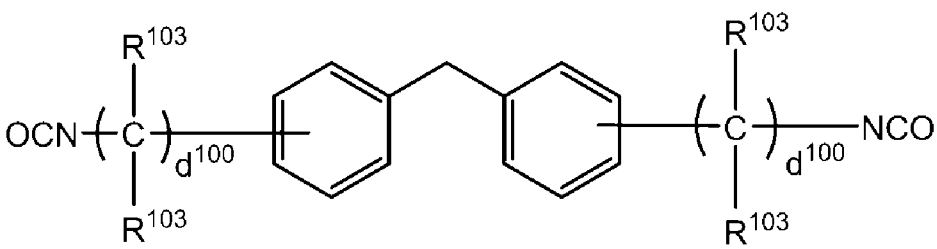

( IV )

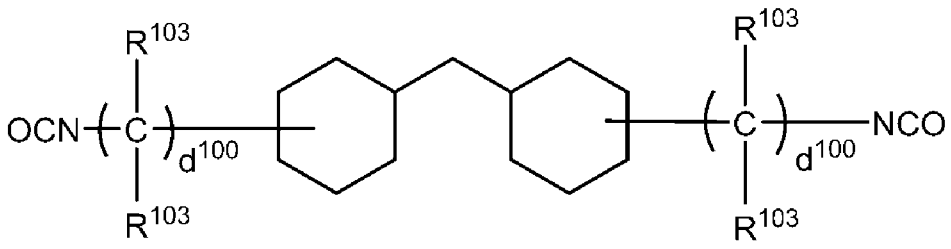

( V )

In the formulae, $R^{103}$'s each independently represent a hydrogen atom or an alkyl group having 1 to 4 carbon atoms; and $d^{100}$ represents an integer of 0 to 4.

The compound represented by the formula (IV) and the compound represented by the formula (V) differ from each other from the standpoint that the former is a compound having two benzene rings, whereas the latter is a compound having two cyclohexane rings.

The alkyl group serving as $R^{103}$ may be linear or branched. Above all, $R^{103}$ is preferably a hydrogen atom, a methyl group, or an ethyl group.

Specific examples of the compound represented by the formula (IV) or formula (V) include 4,4'-diphenylmethane diisocyanate and dicyclohexylmethane-4,4'-diisocyanate. These compounds may be used alone or may be used in combination of two or more thereof.

(Component (B1); Following Formula (VI) (Polyisocyanate Compound Having Norbornane Ring))

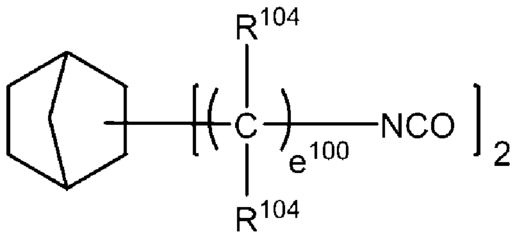

( VI )

In the formula, $R^{104}$'s each independently represent a hydrogen atom or an alkyl group having 1 to 4 carbon atoms; and $e^{100}$ represents an integer of 0 to 4.

The alkyl group serving as $R^{104}$ may be linear or branched. Above all, $R^{104}$ is preferably a hydrogen atom, a methyl group, or an ethyl group.

Specific examples of the compound represented by the formula (VI) include norbornane diisocyanate, 2,5-bis(isocyanatomethyl)-bicyclo[2,2,1]-heptane and 2,6-bis(isocyanatomethyl)-bicyclo[2,2,1]-heptane. These compounds may be used alone or may be used in combination of two or more thereof.

A halogen-substituted compound, an alkyl-substituted compound, an alkoxy-substituted compound, or a nitro-substituted compound of the aforementioned polyisocyanate compound, a prepolymer type modified product with a polyhydric alcohol, a carbodiimide modified product, a urea modified product, a biuret modified product, a dimerization or trimerization reaction product, or the like can also be used.

(Component (B1); Polyisothiocyanate Compound)

Examples of the polyisothiocyanate compound of the polyiso(thio)cyanate compound include compounds obtained by substituting, in the polyisocyanate compounds represented by the formulae (I) to (VI), the isocyanate group with the isothiocyanate group. More specifically, examples thereof include an aliphatic isothiocyanate compound, an alicyclic isothiocyanate compound, an aromatic isothiocyanate compound, a heterocyclic ring-containing isothiocyanate compound, a sulfur-containing aliphatic isothiocyanate compound, a sulfur-containing aromatic isothiocyanate compound, and a sulfur-containing heterocyclic isothiocyanate compound.

Examples of the aliphatic isothiocyanate compound include 1,2-diisothiocyanatoethane, 1,3-diisothiocyanatopropane, 1,4-diisothiocyanatobutane, 1,6-diisothiocyanatohexane, and p-phenylenediisopropylidene diisothiocyanate.

Examples of the alicyclic isothiocyanate compound include cyclohexyl isothiocyanate, cyclohexane diisothiocyanate, 2,4-bis(isothiocyanatomethyl)norbornane, 2,5-bis(isothiocyanatomethyl)norbornane, 3,4-bis(isothiocyanatomethyl)norbornane, and 3,5-bis(isothiocyanatomethyl)norbornane. Examples of the aromatic isothiocyanate compound

include phenyl isothiocyanate, 1,2-diisothiocyanatobenzene, 1,3-diisothiocyanatobenzene, 1,4-diisothiocyanatobenzene, 2,4-diisothiocyanatotoluene, m-xylene 2,5-diisothiocyanate, 1,1'-biphenyl 4,4'-diisothiocyanate, 1,1'-methylenebis(4-isothiocyanatobenzene), 1,1'-methylenebis(4-isothiocyanato-2-methylbenzene), 1,1'-methylenebis(4-isothiocyanato-3-methylbenzene), 1,1'-(1,2-ethanediyl)bis(4-isothiocyanatobenzene), 4,4'-diisothiocyanatobenzophenone, 4,4'-diisothiocyanato-3,3'-dimethylbenzophenone, benzanilide-3,4'-diisothiocyanate, diphenyl ether-4,4'-diisothiocyanate, and diphenylamine-4,4'-diisothiocyanate.

Examples of the heterocyclic ring-containing isothiocyanate compound include 2,4,6-triisothiocyanate 1,3,5-triazine.

Examples of a carbonyl isothiocyanate compound include hexanedioyl diisothiocyanate, nonanedioyl diisothiocyanate, carbonic diisothiocyanate, 1,3-benzenedicarbonyl diisothiocyanate, 1,4-benzenedicarbonyl diisothiocyanate, and (2,2'-bipyridine)-4,4'-dicarbonyl diisothiocyanate.

Furthermore, a polyfunctional isothiocyanate compound having, in addition to the sulfur atom of the isothiocyanate group, at least one sulfur atom can also be used. Examples of such a multifunctional isothiocyanate compound include a sulfur-containing aliphatic isothiocyanate compound, a sulfur-containing aromatic isothiocyanate compound, and a sulfur-containing heterocyclic isothiocyanate compound.

Examples of the sulfur-containing aliphatic isothiocyanate compound include thiobis(3-isothiocyanatopropane), thiobis(2-isothiocyanatoethane), and dithiobis(2 -isothiocyanatoethane).

Examples of the sulfur-containing aromatic isothiocyanate compound include 1-isothiocyanato-4-{(2-isothiocyanato)sulfonyl}benzene, thiobis(4-isothiocyanatobenzene), sulfonylbis(4-isothiocyanatobenzene), sulfinylbis(4-isothiocyanatobenzene), dithiobis(4-isothiocyanatobenzene), 4-isothiocyanato-1-{(4-isothiocyanatophenyl)sulfonyl}-2-methoxybenzene, 4-methyl-3-isothiocyanatobenzene sulfonyl-4'-isothiocyanatophenyl ester, and 4-methyl-3-isothiocyanatobenzenesulfonylanilide-3'-methyl-4'-isothiocyanate.

Examples of the sulfur-containing heterocyclic isothiocyanate compound include thiophene-2,5-diisothiocyanate and 1,4-dithiane-2,5-diisothiocyanate.

(Component (B1); Compound Having Isocyanate Group and Isothiocyanate Group)

As for the polyiso(thio)cyanate compound, examples of the compound having both an isocyanate group and an isothiocyanate group include a compound obtained by substituting at least one isocyanate group with an isothiocyanate group in the polyisocyanate compounds of the aforementioned specific examples and a compound obtained by substituting at least one isothiocyanate group with an isocyanate group in the polyisothiocyanate compounds of the aforementioned specific examples.

(Preferred Examples of Component (B1))

Among the polyiso(thio)cyanate compounds (B1), taking into consideration the uniformity of the adhesive layer containing a urethane resin, a compound having 2 to 6 iso(thio)cyanate groups in a molecule thereof is preferred, a compound having 2 to 4 iso(thio)cyanate groups is more preferred, and a compound having two iso(thio)cyanate groups is still more preferred. Specific examples include pentamethylene diisocyanate, hexamethylene diisocyanate, heptamethylene diisocyanate, octamethylene diisocyanate, isophorone diisocyanate, norbornane diisocyanate, 2,5-bis(isocyanatomethyl)-bicyclo[2,2,1] -heptane, 2,6-bis(isocyanatomethyl)-bicyclo[2,2, 1] -heptane, 1,2-bis(2-isocyanatoethylthio)ethane, xylene diisocyanate (o-, m-, p-), 2,4-tolylene diisocyanate, 2,6-tolylene diisocyanate, 1,3-bis(isocyanatomethyl)cyclohexane (mixture of isomers), and 4,4'-diphenylmethane diisocyanate. Of these, isophorone diisocyanate, norbornane diisocyanate, and 1,3-bis(isocyanatomethyl)cyclohexane (mixture of isomers) are especially preferred from the viewpoint of durability, such as weather resistance of the adhesive layer containing a urethane resin and photochromic properties and also operability on the occasion of forming the adhesive layer containing a urethane resin. These compounds may be used alone or may be used in combination of two or more thereof.

[Poly(thi)ol Compound (B2)]

The photochromic adhesive composition of the present invention contains the poly(thi)ol compound (B2). Examples of the polyol compound of the poly(thi)ol compound include an aliphatic polyol compound and an aromatic polyol compound each having 2 to 6 hydroxy groups. Among the poly(thi)ol compounds, examples of the compound which is suitable for forming the photochromic optical article having excellent transparency and mechanical strength include compounds represented by the following formulae (VII) to (IX), (XI) to (XIII), and (XV) to (XIX).

(Component (B2); Following Formula (VII) (Poly(thi)ol Compound Having Alkylene Group, etc.))

$$R^{105}\text{-}B^{100}\text{-}R^{105} \qquad \text{(VII)}$$

In the formula, $B^{100}$ represents an alkylene group or an alkenyl group each having 2 to 30 carbon atoms; and $R^{105}$'s each independently represent a hydroxy group or a thiol group.

The alkylene group or alkenyl group serving as $B^{100}$ may be linear or branched. Above all, $B^{100}$ is preferably a linear alkylene group having 2 to 15 carbon atoms.

Specific examples of the compound represented by the formula (VII) include a polyethylene polyol (2 to 15 carbon atoms), 1,10-decanedithiol, and 1,8-octanedithiol. These compounds may be used alone or may be used in combination of two or more thereof.

(Component (B2); Following Formula (VIII) (Poly(thi)ol Compound Having Two or More Ether Bonds) or Following formula (IX) (Poly(thi)ol Compound Having Ester Bond)

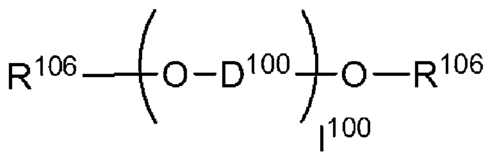

( VIII )

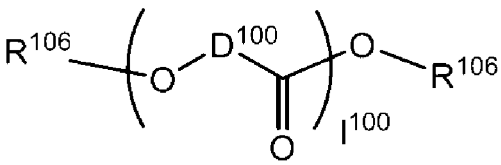

( IX )

In the formulae, $D^{100}$ represents an alkylene group or an alkenyl group each having 2 to 15 carbon atoms; $R^{106}$'s each independently represent a hydrogen atom or a group represented by the following formula (X):

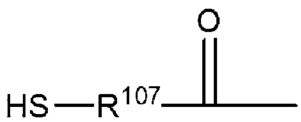

( X )

wherein $R^{107}$ represents an alkylene group having 1 to 6 carbon atoms; and $l^{100}$ is an average value and represents a number of 1 to 100.

The alkylene group or alkenyl group serving as $D^{100}$ may be linear or branched. Above all, $D^{100}$ is preferably a linear alkylene group having 2 to 6 carbon atoms.

The alkylene group serving as $R^{107}$ may be linear or branched. Above all, $R^{107}$ is preferably a methyl group, an ethylene group, a trimethylene group, or a propylene group.

Specific examples of the compound represented by the formula (VIII) or the formula (IX) include a polyethylene glycol ($l^{100}$ = 1 to 100), a polycaprolactone polyol ($l^{100}$ = 1 to 100), tetraethylene glycol bis(3-mercaptopropionate), 1,4-butanediol bis(3-mercaptopropionate), and 1,6-hexanediol bis(3-mercaptopropionate). These compounds may be used alone or may be used in combination of two or more thereof.

(Component (B2); Following Formula (XI) (Carbonate Polyol Compound))

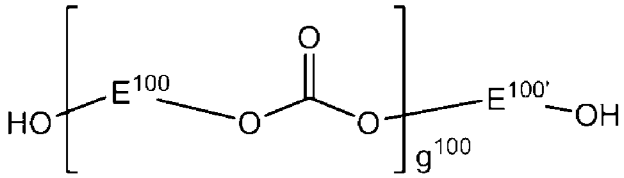

( XI )

In the formula, $E^{100}$ and $E^{100'}$ each independently represent an alkylene group having 2 to 15 carbon atoms; and $g^{100}$ is an average value and represents a number of 1 to 20.

The alkylene group serving as $E^{100}$ and $E^{100'}$ may be linear or branched. Above all, $E^{100}$ and $E^{100'}$ are preferably a trimethylene group, a tetramethylene group, a pentamethylene group, a hexamethylene group, an octamethylene group, a nonamethylene group, a dodecamethylene group, a pentadecamethylene group, a 1-methyltriethylene group, a 1-ethyltriethylene group, or a 1-isopropyltriethylene group.

Specific examples of the compound represented by the formula (XI) include a polycarbonate polyol ($E^{100}$ and $^{100'}$ are a pentamethylene group and a hexamethylene group, respectively; and $g^{100}$ = 4 to 10). These compounds may be used alone or may be used in combination of two or more thereof.

(Component (B2); Following Formula (XII) (Polyfunctional Polyol Compound))

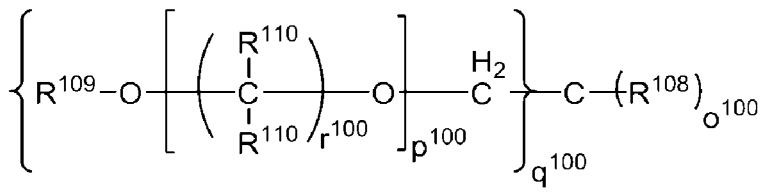

( XII )

In the formula, $R^{108}$ represents an alkyl group having 1 to 6 carbon atoms, and when plural groups are present, then they may be the same as or different from each other; $R^{109}$'s each independently represent a hydrogen atom or the group represented by the formula (X); $R^{110}$'s each independently represent a hydrogen atom, a methyl group, or an ethyl group; $o^{100}$ represents an integer of 0 to 2, $q^{100}$ represents an integer of 2 to 4, and $o^{100} + q^{100} = 4$; $p^{100}$ represents an integer of 0 to 10; and $r^{100}$ represents an integer of 1 to 6.

The alkyl group serving as $R^{108}$ may be linear or branched. Above all, $R^{108}$ is preferably a methyl group, an ethyl group, a trimethyl group, or a propyl group.

Specific examples of the compound represented by the formula (XII) include ditrimethylolpropane, trimethylolpropane tripolyoxyethylene ether (for example, TMP-30, manufactured by Nippon Nyukazai Co., Ltd.), trimethylolpropane, pentaerythritol, trimethylolpropane tris(3-mercaptopropionate), pentaerythritol tetrakis(3-mercaptopropionate), trimethylolpropane tris(3-mercaptobutyrate), and trimethylolpropane trimercaptoacetate. These compounds may be used alone or may be used in combination of two or more thereof.

(Component (B2); Following formula (XIII) (Polyol Compound Having Ether Bond))

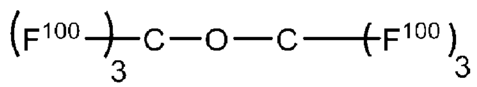

( XIII )

In the formula, $F^{100}$'s each independently represent an alkyl group having 1 to 6 carbon atoms or a group represented by the following formula (XIV):

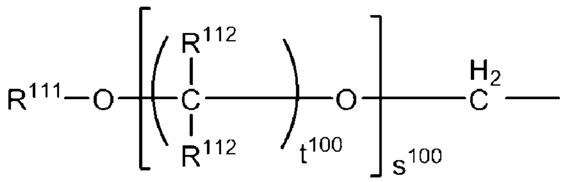

( XIV )

wherein $R^{111}$ represents a hydrogen atom or the group represented by the formula (X); $R^{112}$'s each independently represent a hydrogen atom, a methyl group, or an ethyl group; $s^{100}$ represents an integer of 0 to 10; and $t^{100}$ represents an integer of 1 to 6, provided that at least two $F^{100}$'s are the group represented by the formula (XIV).

At least two $F^{100}$'s are the group represented by the formula (XIV). Examples of other group include an alkyl group having 1 to 6 carbon atoms. The alkyl group serving as $F^{100}$ may be linear or branched. Above all, $F^{100}$ is preferably a methyl group, an ethyl group, a trimethyl group, or a propyl group.

Specific examples of the compound represented by the formula (XIII) include ditrimethylolpropane and dipentaerythritol hexakis(3-mercaptopropionate). These compound may be used alone or may be used in combination of two or more thereof.

(Component (B2); Following Formula (XV) (Polyol Compound Having Two Hydroxy Groups)

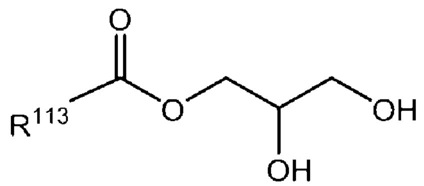

( XV )

In the formula, $R^{113}$ represents an alkyl group or an alkenyl group each having 1 to 30 carbon atoms.

The alkyl group or alkenyl group serving as $R^{113}$ may be linear or branched. Since the compound represented by the formula (XV) can be obtained through a condensation reaction of a fatty acid and glycerin, examples of $R^{113}$ include an alkyl moiety or an alkenyl moiety of a fatty acid. Examples of the fatty acid include capric acid, lauric acid, myristic acid, pentadecylic acid, palmitic acid, margaric acid, stearic acid, oleic acid, linoleic acid, arachidic acid, behenic acid, and lignoceric acid.

Specific examples of the compound represented by the formula (XV) include glyceryl monooleate (for example, MONOOLEIN, manufactured by Tokyo Chemical Industry Co., Ltd.), monoelaidin, glyceryl monolinoleate, and glyceryl monobehenate. These compounds may be used alone or may be used in combination of two or more thereof.

(Component (B2); Following Formula (XVI) (Polyfunctional Polythiol Compound))

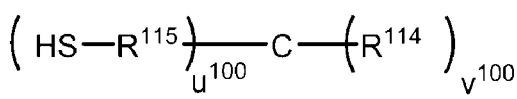

( XVI )

In the formula, $R^{114}$ represents a hydrogen atom, an alkyl group having 1 to 6 carbon atoms, or the group in which a part of carbon atoms in the chain of the alkyl group having 1 to 6 carbon atoms is an -S- bond, and when plural groups are present, then they may be the same as or different from each other; $R^{115}$ represents an alkylene group having 1 to 10 carbon atoms, a group in which a part of carbon atoms in the chain of the alkylene group having 1 to 10 carbon atoms is an -S- bond, or a group obtained by substituting a part of hydrogen atoms in such a group with a thiol group, and when plural groups are present, then they may be the same as or different from each other; $u^{100}$ represents an integer of 2 to 4; and $v^{100}$ represents an integer of 0 to 2.

The alkyl group serving as $R^{114}$ may be linear or branched. Above all, $R^{114}$ is preferably a hydrogen atom, a methyl group, or an ethyl group. Examples of the group in which a part of carbon atoms in the chain of the alkyl group having 1 to 6 carbon atoms is an -S- bond include $-CH_2SCH_3$. The alkylene group serving as $R^{115}$ may be linear or branched. Above all, $R^{115}$ is preferably a methylene group, an ethylene group, a trimethylene group, or a propylene group. In addition, examples of the group in which a part of carbon atoms in the chain of the alkylene group having 1 to

10 carbon atoms is an -S- bond include $-CH_2S-$, $-CH_2CH_2S-$, and $-CH_2CH_2CH_2S-$. Furthermore, examples of the group in which a part of hydrogen atoms of the alkylene group having 1 to 10 carbon atoms or the like is substituted with a thiol group include $-CH_2SCH(SCH_2SH)-$ .

Specific examples of the compound represented by the formula (XVI) include 1,2-bis[(2-mercaptoethyl)thio]-3-mercaptopropane, 2,2-bis(mercaptomethyl)-1,4-butanedithiol, 4-mercaptomethyl-1,8-dimercapto-3,6-dithiaoctane, 1,1,1,1-tetrakis(mercaptomethyl)methane, 1,1,3,3-tetrakis(mercaptomethylthio)propane, and 1,1,2,2-tetrakis(mercaptomethylthio)ethane. These compounds may be used alone or may be used in combination of two or more thereof.

(Component (B2); Following Formula (XVII) (Cyclic Polythiol Compound))

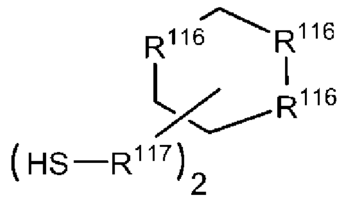

(XVII)

In the formula, $R^{116}$ represents a methylene group or a sulfur atom, provided that at least two $R^{116}$'s are a sulfur atom; and $R^{117}$ represents an alkylene group having 1 to 6 carbon atoms or a group in which a part of carbon atoms in the chain of the alkylene group having 1 to 6 carbon atoms is an -S-bond.

The alkylene group serving as $R^{117}$ may be linear or branched. Above all, $R^{117}$ is preferably a methylene group, an ethylene group, a trimethylene group, or a propylene group. In addition, examples of the group in which a part of carbon atoms in the chain of the alkylene group having 1 to 6 is an -S- bond include $-CH_2S-$ and $-CH_2CH_2S-$.

Specific examples of the compound represented by the formula (XVII) include 2,5-bis(mercaptomethyl)-1,4-dithiane and 4,6-bis(mercaptomethylthio)-1,3-dithiane. These compounds may be used alone or may be used in combination of two or more thereof.

(Component (B2); Following Formula (VIII) (Polythiol Compound Having Benzene Ring))

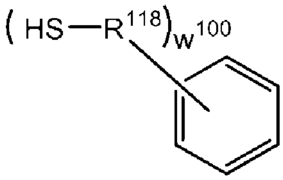

( XVIII )

In the formula, $R^{118}$'s each independently represent an alkylene group having 1 to 6 carbon atoms or a group in which a part of carbon atoms in the chain of the alkylene group having 1 to 6 carbon atoms is an -S- bond; and $w^{100}$ represents 2 or 3.

The alkylene group serving as $R^{118}$ may be linear or branched. Above all, $R^{118}$ is preferably a methylene group, an ethylene group, a trimethylene group, or a propylene group. In addition, examples of the group in which a part of carbon atoms in the chain of the alkylene group having 1 to 6 carbon atoms is an -S- bond include $-CH_2CH_2CH_2SCH_2-$, $-CH_2CH_2SCH_2-$, and $-CH_2SCH_2-$.

Specific examples of the compound represented by the formula (XVIII) include 1,4-bis(mercaptopropylthiomethyl)benzene. These compounds may be used alone or may be used in combination of two or more thereof.

(Component (B2); Following Formula (XIX) (Poly(thi)ol Compound Having Triazine Ring))

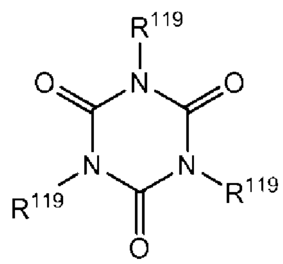

( XIX )

In the formula, $R^{119}$'s each independently represent an alky group having 1 to 6 carbon atom or a group represented by the following formula (XX):

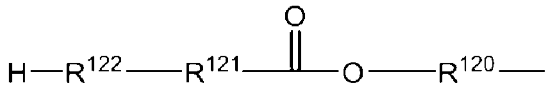

( XX )

wherein $R^{120}$ and $R^{121}$ each independently represent an alkylene group having 1 to 6 carbon atoms; and $R^{122}$ represents an oxygen atom or a sulfur atom, provided that at least two $R^{119}$'s are the group represented by the formula (XX).

The alkylene group serving as $R^{120}$ and $R^{121}$ may be linear or branched. Above all, $R^{120}$ and $R^{121}$ are preferably a methylene group, an ethylene group, a trimethylene group, or a propylene group.

Specific examples of the compound represented by the formula (XIX) include 2-mercaptomethanol and tris-{(3-mercaptopropionyloxy)-ethyl}-isocyanurate. These compounds may be used alone or may be used in combination of two or more thereof.

Examples of a preferred polyol compound other than the compounds represented by the formulae (VII) to (IX), (XI) to (XIII), and (XV) to (XIX) include glycerin, diglycerin, and sorbitol, and derivatives obtained through a reaction thereof with polyethylene glycol, polypropylene glycol, polybutylene glycol, or the like.

(Preferred Examples of Component (B2))

Among the poly(thi)ol compounds (B2), taking into consideration the photochromic properties of the obtained photochromic optical article, a compound having 2 to 6 active hydrogen-containing groups selected from a hydroxy group and a thiol group in a molecule thereof is preferred, and a compound having 4 to 6 active hydrogen-containing groups in a molecule thereof is more preferred. Specific examples of the compound having three active hydrogen-containing groups include trimethylolpropane, trimethylolpropane tris(3-mercaptopropionate), trimethylolpropane tris(3-mercaptobutyrate), trimethylolpropane trimercaptoacetate, 1,2-bis[(2-mercaptoethyl)thio]-3-mercaptopropane, and tris-{(3-mercaptopropionyloxy)-ethyl}-isocyanurate. Specific examples of the compound having 4 to 6 active hydrogen-containing groups include pentaerythritol, pentaerythritol tetrakis(3-mercaptopropionate), dipentaerythritol hexakis(3-mercaptopropionate), 1,1,1,1-tetrakis(mercaptomethyl)methane, 1,1,3,3-tetrakis(mercaptomethylthio)propane, and 1,1,2,2-tetrakis(mercaptomethylthio)ethane. These compounds may be used alone or may be used in combination of two or more thereof.

[Component (B3); Mono(thi)ol Compound]

In the present invention, it is suitable to use, in addition to the component (B1) and the component (B2), the mono(thi)ol compound (B3), and a mono(thi)ol compound having a molecular weight of 200 or more is suitable. By using the component (B3), there is a tendency that not only the adhesion of the adhesive layer containing a urethane resin is improved, but also the photochromic properties of the photochromic optical article, such as color development density and fading rate, are improved. Although the reason why the photochromic properties are improved is not elucidated yet, it may be estimated as follows. When the component (B1) and the component (B2) are allowed to react with each other, a rigid cured material of a network structure having a (thio)urethane bond is obtained. When the component (B3) is further blended therein, since the mono(thi)ol compound having a one end-free structure is incorporated into the network structure, a flexible space (soft segment) is formed in the periphery of the mono(thi)ol compound. As a result, it may be considered that in the photochromic compound present in the vicinity of this space, a reversible structural change occurs more rapidly, whereby the photochromic properties, such as color development density and fading rate, are improved.

Furthermore, since the component (B3) has only one hydroxy group or thiol group, it has a smaller number of hydrogen bonds than the poly(thi)ol compound. As a result, it is possible to reduce the viscosity of the photochromic adhesive composition, and it may be considered that handling properties on the occasion of manufacturing the photochromic optical article are improved.

In the component (B3), examples of the compound which is suitable for improving the photochromic properties and the handling properties on the occasion of manufacturing the photochromic optical article include a compound represented by the following formula (XXI).

$$R^{200}\text{-J-}R^{201}\text{-K-}R^{202} \qquad (XXI)$$

In the formula, $R^{200}$ is a monovalent organic group; $R^{201}$ is a divalent organic group; $R^{202}$ is an organic group having one hydroxy group or thiol group; and J and K represent a polymer chain different from each other.

Examples of the monovalent organic group serving as $R^{200}$ include an alkyl group, such as a methyl group, an ethyl group, a 1-propyl group, and a 2-propyl group; an alkoxy group, such as a methoxy group, an ethoxy group, a 1-propanoxy group, and a 2-propanoxy group; an alkylthio group, such as a methylmercapto group and an ethylmercapto group; and an acetyl group.

The divalent organic group serving as $R^{201}$ is a divalent linking group having 1 to 10 carbon atoms, which connects J and K in the formula (VVI) with each other, and examples thereof include a linking group of an ether type, such as an ethylene glycol group and a propylene glycol group, a linking group of a biscarboxylate type, such as a Michael adduct of β-mercaptopropionic acid and a (meth)acrylic acid group, and a linking group of an ether carboxylate type, such as a glycolic acid group. An arbitrary linking group can be used according to the kinds of J and K in the formula (XXI) (synthesis method).

Examples of the organic group having one hydroxy group or thio group serving as $R^{202}$ include an organic group having a hydroxy group, such as a hydroxymethyl group, a hydroxyethyl group, a hydroxypropyl group, a hydroxybutyl group, and a dihydroxypropyl group; and an organic group having a mercapto group, such as a mercaptomethyl group, a mercaptoethyl group, a mercaptopropionic acid group, a mercaptoethylcarbonyl group, a mercaptopropylcarbonyl group, and a thioglycolic acid group.

Examples of the polymer chain represented by J and K include a polyalkylene chain, a polyester chain, a polysiloxane chain, a polyethyleneimine chain, and a polyalkylene oxide chain. The polymer chain is preferably a polyalkylene chain or a polyalkylene oxide chain. A carbon-carbon double bond may be contained in a part of the polymer chain.

Examples of the polyalkylene chain serving as the polymer chain represented by J and K include a polyethylene chain, a polypropylene chain, a polybutylene chain, a polystyrene chain, a poly(meth)acrylic acid ester chain, a poly(meth)acrylic acid chain, and a polymethylene indane chain.

Examples of the polyester chain serving as the polymer chain represented by J and K include a poly-α-acetolactone chain, a poly-β-propiolactone chain, a poly-y-butyrolactone chain, a poly-δ-valerolactone chain, a poly-e-caprolactone chain, a polylactic acid chain, a polyglycolic acid chain, a polylactic acid-glycolic acid copolymer chain, and a polyethylene terephthalate chain.

Examples of the polysiloxane chain serving as the polymer chain represented by J and K include a polydimethylsiloxane chain and a polymethylphenylsiloxane chain.

Examples of the polyethyleneimine chain serving as the polymer chain represented by J and K include a polyethyleneimine chain, a polypropionylaziridine chain, a polyacetylaziridine chain, and a polyformylaziridine chain.

Examples of the polyalkylene oxide chain serving as the polymer chain represented by J and K include a polyethylene glycol chain, a polypropylene glycol chain, a polybutylene glycol chain, a polypentene glycol chain, a polyhexene glycol chain, a polyheptene glycol chain, a block copolymer chain of polyethylene glycol and polypropylene glycol, and a random copolymer chain of polyethylene glycol and polypropylene glycol.

Examples of the monool compound of the mono(thi)ol compound represented by the formula (XXI) include a polyoxyethylene monoalkyl ether, a polyoxypropylene monoalkyl ether, a polyoxyethylene polyoxypropylene monoalkyl ether, polyethylene glycol monooleyl ether, polyoxyethylene oleate, polyethylene glycol monolaurate, polyethylene glycol monostearate, a linear polyoxyethylene alkyl ether (for example, polyethylene glycol monomethyl ether, polyoxyethylene lauryl ether, polyoxyethylene-2-ethylhexyl ether, polyoxyethylene tridecyl ether, polyoxyethylene cetyl ether, and polyoxyethylene stearyl ether), and a linear or branched saturated alkyl alcohol having 5 to 30 carbon atoms; and examples of the monothiol compound include a linear or branched saturated or unsaturated alkyl thiol having 5 to 30 carbon atoms.

Examples of the monool compound of the mono(thi)ol compound other than that represented by the formula (XXI) include polyethylene glycol mono-4-octylphenyl ether; and examples of the monothiol compound include 3-methoxybutyl thioglycolate, 2-ethylhexyl thioglycolate, 2-mercaptoethyl octanoate, 3-methoxybutyl 3-mercaptopropionate, ethyl 3-mercaptopropionate, 2-octyl 3-mercaptopropionate, n-octyl 3-mercaptopropionate, methyl 3-mercaptopropionate, tridecyl 3-mercaptopropionate, and stearyl 3-mercaptopropionate.

Among these mono(thio)ol compounds, from the standpoint that the adhesion and the photochromic properties can be improved by the addition of a small amount thereof, a polyoxyethylene monoalkyl ether, a polyoxypropylene monoalkyl ether, a polyoxyethylene polyoxypropylene monoalkyl ether, polyethylene glycol monooleyl ether, polyoxyethylene oleate, polyethylene glycol monolaurate, polyethylene glycol monostearate, polyethylene glycol mono-4-octylphenyl ether, a linear polyoxyethylene alkyl ether (for example, polyethylene glycol monomethyl ether, polyoxyethylene lauryl ether, polyoxyethylene-2-ethylhexyl ether, polyoxyethylene tridecyl ether, polyoxyethylene cetyl ether, and polyoxyethylene stearyl ether), a linear or branched saturated alkyl alcohol having 5 to 30 carbon atoms, 2-octyl 3-mercaptopropionate, n-octyl 3-mercaptopropionate, methyl 3-mercaptopropionate, tridecyl 3-mercaptopropionate, stearyl 3-mercaptopropionate, and a linear or branched saturated or unsaturated alkyl thiol having 5 to 30 carbon atoms are preferred. These compounds may be used alone or may be used in combination of two or more thereof.

From the viewpoint of more improving the photochromic properties, the component (B3) is preferably a compound having a molecular weight of 100 or more, and more preferably a compound having a molecular weight of 150 or more. In order to improve the handling properties of the photochromic adhesive composition, for the purpose of reducing the viscosity of the photochromic adhesive composition, it is also effective to mix the component (B3) of a low molecular weight (low viscosity) and the component (B3) of a high molecular weight (high viscosity).

When the total amount of the component (B1), the component (B2), and the component (B3) is defined as 100 parts by mass, the content ratio of the component (B3) is preferably 2 to 40 parts by mass, and more preferably 5 to 15 parts by mass. By setting the content ratio of the component (B3) to 2 parts by mass or more, the adhesion and the photochromic properties tend to be more improved. In addition, by setting the content ratio of the component (B3) to 40 parts by mass or less, a lowering of the durability, such as heat resistance of the adhesive layer containing a urethane resin tends to be suppressed.

[Blending Ratio of Component (B1), Component (B2), and Component (B3)]

From the viewpoint of more improving the adhesion of the adhesive layer containing a urethane resin and the photochromic properties, one obtained by curing the component (B1), the component (B2), and the component (B3) at the following blending ratio is preferred. That is, when the total molar number of the iso(thio)cyanate group in the component (B1) is defined as n1, the total molar number of the active hydrogen-containing group in the component (B2) is defined as n2, and the total molar number of the active hydrogen-containing group in the component (B3) is defined as n3, [n1/(n2 + n3)] is preferably 0.9/1 to 1.5/1, and more preferably 1.0/1 to 1.15/1. In addition, [n2/n3] is preferably 1/1 to 300/1, and more preferably 3/1 to 50/1. When expressed in terms of a mass, preferably, the content of the component (B1) is 20 to 74 parts by mass, the content of the component (B2) is 21 to 75 parts by mass, and the content of the component (B3) is 2 to 40 parts by mass relative to 100 parts by mass of the total of the component (B1), the component (B2), and the component (B3); and more preferably, the content of the component (B1) is 35 to 64 parts by mass, the content of the component (B2) is 29 to 59 parts by mass, and the content of the component (B3) is 5 to 15 parts by mass relative to 100 parts by mass of the total of the component (B1), the component (B2), and the component (B3).

In the present invention, the component (B1) and the component (B2) are essential, and the component (B3) is suitably blended. However, other monomer having an iso(thio)cyanate group or an active hydrogen-containing group may be further blended. Among the other monomers having an iso(thio)cyanate group or an active hydrogen-containing group, a polyrotaxane monomer (B4) having a complex molecular structure formed of an axis molecule and a plurality of cyclic molecules including the axis molecule, the cyclic molecule having an iso(thio)cyanate group or an active hydrogen-containing group selected from a hydroxy group and a thiol group, is preferably contained.

In view of the fact that the component (B4) is contained, there is a tendency that not only the adhesion of the adhesive layer containing a urethane resin is more improved, but also the photochromic properties of the photochromic optical article are more improved. Although the reason for this is not elucidated yet, it may be estimated as follows. That is, it may be considered that in view of the fact that the component (B4) reacts with at least one compound of the component (B1) and the component (B2), flexibility is given to the adhesive layer containing a urethane resin, and the adhesion to the optical article plate is improved. In addition, it may be considered that in view of the fact that the photochromic compound is present in the periphery of the component (B4), the photochromic compound is homogeneously held in a state where the photochromic compound is dispersed, and excellent photochromic properties can be persistently revealed.

The component (B4) is hereunder described.

[Component (B4); Polyrotaxane Monomer]

As shown in Fig. 2, a polyrotaxane monomer 10 has a complex molecular structure formed of a chain-shaped axis molecule 20 and cyclic molecules 30. More specifically, a plurality of cyclic molecules 30 includes the chain-shaped axis molecule 20, and the polyrotaxane monomer 10 has the structure in which the axis molecule 20 penetrates into the interiors of the rings which the cyclic molecules 30 have. Although the cyclic molecules 30 can freely slide on the axis molecule 20, bulky end groups 40 are formed at both ends of the axis molecule 20, and the cyclic molecules 30 are prevented from dropping off the axis molecule 20. In this way, the cyclic molecules 30 which the polyrotaxane monomer

10 has can slide on the axis molecule 20, whereby a local pressure or the like from the outside is easily relieved on the occasion when the adhesive layer containing a urethane resin is formed, and it is possible to improve the adhesion between the adhesive layer containing a urethane resin and the optical article plate. In the polyrotaxane monomer 10 shown in Fig. 2, a side chain 50 is introduced into the ring of the cyclic molecule 30.

The polyrotaxane monomer is a known compound and can be synthesized by a method described in WO 2015/068798 A.

(Component (B4); Axis Molecule)

The chain-shaped part of the axis molecule is not particularly restricted so long as it can penetrate into the ring of the cyclic molecule, and it may be linear or branched. The chain-shaped part is generally formed of a polymer. Examples of the suitable polymer forming the chain-shaped part of the axis molecule include polyethylene glycol, polyisoprene, polyisobutylene, polybutadiene, polypropylene glycol, polytetrahydrofuran, polydimethylsiloxane, polyethylene, polypropylene, polyvinyl alcohol, and polyvinyl methyl ether.

The bulky end groups formed at both ends of the chain-shaped part are not particularly restricted so long as the bulky end group is a group which prevents the cyclic molecule from dropping off the axis molecule. Specific examples thereof include an adamantyl group, a trityl group, a fluoresceinyl group, a dinitrophenyl group, and a pyrenyl group, and the adamantyl group is preferred from the standpoint of easy introduction or the like.

Although the mass average molecular weight (Mw) of the axis molecule is not particularly restricted, it is preferably in a range of 1,000 to 100,000, more preferably in a range of 5,000 to 80,000, and still more preferably in a range of 10,000 to 50,000. When the mass average molecular weight (Mw) of the axis molecule is 1,000 or more, the mobility of the cyclic molecule tends to be improved. In addition, when the mass average molecular weight (Mw) of the axis molecule is 100,000 or less, the compatibility with other components tends to be improved.

(Component (B4); Cyclic Molecule)

The cyclic molecule has a ring having a size so as to be able to include the axis molecule. Examples of such a ring include a cyclodextrin ring, a crown ether ring, a benzocrown ring, a dibenzocrown ring, and a dicyclohexanocrown ring, and the cyclodextrin ring is preferred. As for the cyclodextrin ring, an $\alpha$-body (ring inner diameter: 0.45 to 0.6 nm), a $\beta$-body (ring inner diameter: 0.6 to 0.8 nm), and a $\gamma$-body (ring inner diameter: 0.8 to 0.95 nm) are included, and an $\alpha$-cyclodextrin ring is preferred.

A plurality of cyclic molecules is included in one axis molecule. When the maximum inclusion number of cyclic molecules which can be included per axis molecule is defined as 1.0, the inclusion number of cyclic molecules is generally in a range of 0.001 to 0.6, preferably in a range of 0.002 to 0.5, and more preferably in a range of 0.003 to 0.4.

The maximum inclusion number of cyclic molecules relative to one axis molecule can be calculated from the length of the axis molecule and the thickness of the ring which the cyclic molecule has. For example, when the case where the chain-shaped part of the axis molecule is formed of polyethylene glycol, and the ring which the cyclic molecule has is an $\alpha$-cyclodextrin ring is taken as an example, the maximum inclusion number is calculated as follows. Specifically, two repeating units [$-CH_2-CH_2O-$] of polyethylene glycol are approximated to the thickness of one $\alpha$-cyclodextrin ring. In consequence, the number of repeating units is calculated from the molecular weight of this polyethylene glycol, and a half of the number of repeating units is determined as the maximum inclusion number of cyclic molecules. This maximum inclusion number is defined as 1.0, and the inclusion number of cyclic molecules is adjusted to the aforementioned range.

(Component (B4); Side Chain)

The side chains may be introduced into the rings which the cyclic molecules have. When such side chains are introduced, a pseudo cross-linked structure may be formed in the polyrotaxane monomer (B4). According to this, it is possible to give flexibility to the adhesive layer containing a urethane resin, and the adhesion to the optical article plate can be improved.

The side chain is preferably formed of the repeating units of an organic group having 3 to 20 carbon atoms. Although the mass average molecular weight (Mw) of the side chain is not particularly restricted, it is preferably in a range of 200 to 10,000, more preferably in a range of 250 to 8,000, still more preferably in a range of 300 to 5,000, and especially preferably in a range of 300 to 1,500. When the mass average molecular weight (Mw) of the side chain is 200 or more, the pseudo cross-linked structure tends to be easily formed. When the mass average molecular weight (Mw) of the side chain is 10,000 or less, an increase in the viscosity of the photochromic adhesive composition is suppressed, and handling properties on the occasion of manufacturing the photochromic optical article tend to become favorable.

The aforementioned side chain can be introduced by utilizing a functional group (for example, a hydroxy group) which the ring of the cyclic molecule has and modifying this functional group. For example, the $\alpha$-cyclodextrin ring has

18 hydroxy groups as functional groups, and the side chains can be introduced through the hydroxy groups. That is, 18 side chains can be introduced into one α-cyclodextrin ring at the maximum. In order to thoroughly exhibit the function of the side chains, 6% or more of the total number of functional groups which the rings have, in particular, 30% or more of the total number is preferably modified with the side chains. In the case where the side chains are bonded to 9 out of 18 hydroxy groups in the α-cyclodextrin ring, the modification degree thereof becomes 50%.

The side chains (organic chain) may be linear or branched. By utilizing ring-opening polymerization, radical polymerization, cationic polymerization, anionic polymerization, living radical polymerization, such as atom transfer radical polymerization, RAFT polymerization, and NMP polymerization, or the like, and allowing an appropriate compound to react with the rings which the cyclic molecules have, the side chains having an appropriate size can be introduced. For example, by ring-opening polymerization, side chains derived from a cyclic compound, such as a cyclic lactone, a cyclic ether, a cyclic acetal, a cyclic amine, a cyclic carbonate, an cyclic imino ether, and a cyclic thiocarbonate, can be introduced. Of these, from the viewpoint of easiness of availability, high reactivity, and easy adjustment of the size (molecular weight), a cyclic ether, a cyclic siloxane, a cyclic lactone, or a cyclic carbonate is preferably used. Specific examples of the suitable cyclic compound are described in WO 2015/068798 A or the like. Above all, as the cyclic compound, a cyclic lactone and a cyclic carbonate are preferred; lactones, such as ε-caprolactone, α-acetyl-γ-butyrolactone, α-methyl-γ-butyrolactone, γ-valerolactone, and γ-butyrolactone, are more preferred; and ε-caprolactone is still more preferred.

In the case where the cyclic compound is allowed to react by ring-opening polymerization so as to introduce the side chains, there may be a case where the functional group (for example, a hydroxy group) bonding to the ring is poor in reactivity, and it is difficult to allow a large molecule directly react therewith due to steric hindrance or the like. In such a case, for example, there can be adopted a method in which a low-molecular weight compound, such as propylene oxide, is allowed to react with a functional group to perform hydroxypropylation, thereby introducing a functional group (hydroxy group) which is rich in reactivity, and then, the side chains are introduced by ring-opening polymerization using the aforementioned cyclic compound. This low-molecular weight compound, such as propylene oxide, can also be regarded as the side chain.

Although as mentioned above, the side chains can be introduced into the polyrotaxane monomer (B4) by ring-opening polymerization, as a matter of course, it is also possible to introduce the side chains by another known method with another known compound.

(Component (B4); Iso(thio)cyanate Group or Active Hydrogen-Containing Group)

In the present invention, the cyclic molecule has an active hydrogen-containing group selected from a hydroxy group and a thiol group, or an iso(thio)cyanate group. From the viewpoint of the adhesion and the photochromic properties, this active hydrogen-containing group or iso(thio)cyanate group is preferably introduced into the aforementioned side chain (in particular, the end of the side chain). Above all, taking into consideration the productivity of the polyrotaxane monomer itself, one having a hydroxy group in the side chain is preferred.

(Preferred Examples of Component (B4))

Among the polyrotaxane monomers (B4), a polyrotaxane monomer in which polyethylene glycol having an adamantyl group bonded to the both ends is used as the axis molecule, the α-cyclodextrin ring is used as the cyclic molecule, and furthermore, the side chains in which the ends are hydroxy groups are introduced into the rings with polycaprolactone is preferred.

[Blending Ratios of Component (B1), Component (B2), Component (B3), and Component (B4)]

In the case of using the component (B4), though the adhesion and the photochromic properties are more improved, when the amount of the component (B4) is excessively large, a problem may occur in the handling properties due to an increase in the viscosity. On the other hand, when the amount of the component (B4) is excessively small, the component (B4) only slightly contributes to the adhesion and the photochromic properties. As for a blending ratio when the component (B4) is contained, preferably, the content of the component (B1) is 20 to 74 parts by mass, the content of the component (B2) is 20 to 74 parts by mass, the content of the component (B3) is 2 to 40 parts by mass, and the content of the component (B4) is 1 to 30 parts by mass relative to 100 parts by mass of the total of the component (B1), the component (B2), the component (B3), and the component (B4); and more preferably, the content of the component (B1) is 35 to 64 parts by mass, the content of the component (B2) is 26 to 59 parts by mass, the content of the component (B3) is 5 to 25 parts by mass, and the content of the component (B4) is 2 to 9 parts by mass relative to 100 parts by mass of the total of the component (B1), the component (B2), the component (B3), and the component (B4).

In the present invention, in view of the photochromic properties, the durability, and the adhesion of the photochromic optical article, the blending ratios of the component (B1), the component (B2), the component (B3), and the component (B4) can be appropriately adjusted.

In the case where the component (B4) has the iso(thio)cyanate group, when the total molar number of the iso(thio)cyanate group in the component (B1) is defined as n1, the total molar number of the active hydrogen-containing group in the component (B2) is defined as n2, the total molar number of the active hydrogen-containing group in the component (B3) is defined as n3, and the total molar number of the iso(thio)cyanate group in the component (B4) is defined as n4, [(n1 + n4) /(n2 + n3)] is preferably 0.9/1 to 1.5/1, and more preferably 1.0/1 to 1.15/1.

In the case where the component (B4) has an active hydrogen-containing group, when the total molar number of the iso(thio)cyanate group in the component (B1) is defined as n1, the total molar number of the active hydrogen-containing group in the component (B2) is defined as n2, the total molar number of the active hydrogen-containing group in the component (B3) is defined as n3, and the total molar number of the active hydrogen-containing group in the component (B4) is defined as n4, [n1/(n2 + n3 + n4)] is preferably 0.9/1 to 1.5/1, and more preferably 1.0/1 to 1.15/1. In this case, [n2/n3/n4] is preferably (1 to 300)/1/(0.05 to 10), and more preferably (3 to 50)/1/(0.10 to 2). Here, n4 is the molar number of all the active hydrogen-containing groups contained in the component (B4). That is, the total molar number of not only the active hydrogen-containing groups which the side chains of the component (B4) have but also, for example, the active hydrogen-containing groups which the cyclic molecule has is corresponding to n4.

[Liquid Organic Compound (C1) Having a Molecular Weight of Less Than 200]

In the present invention, for the purpose of improving the photochromic properties, such as color development density and fading rate, a liquid organic compound having a molecular weight of 200 or less (hereinafter also referred to as "component (C1)") may further be contained in the photochromic adhesive composition. As the liquid organic compound having a molecular weight of less than 200, known liquid organic compounds having no active hydrogen-containing group can be used without any restrictions, and above all, a liquid organic compound having a molecular weight of 50 or more and less than 200 is suitable. A liquid organic compound having an active hydrogen-containing group is not suitable because there is a concern that it reacts with the component (C1), thereby hindering the effects of the present invention.

Specific examples of the component (C1) include hydrocarbon-based compounds, such as hexane, heptane, octane, toluene, and xylene; ketone-based compounds, such as acetone, methyl ethyl ketone, and diethyl ketone; and ether-based compounds, such as tetrahydrofuran, ethylene glycol dimethyl ether, diethylene glycol dimethyl ether, and triethylene glycol dimethyl ether; and besides, dichloromethane, chloroform, dimethyl sulfoxide, and dimethylformamide.

Among those mentioned above, in the present invention, taking into consideration the matters that a poor appearance does not occur and that the adhesion to the optical article plate is not lowered, one having a boiling point in a range of 65 to 150°C is suitable, and furthermore, above all, hydrocarbon-based compounds, such as cyclohexane, heptane, octane, and toluene, and methyl ethyl ketone, diethyl ketone, and diethylene glycol dimethyl ether are especially suitably used.

A blending ratio of the component (C1) is appropriately set within a range where the appearance of the adhesive layer containing a urethane resin after curing is not impaired. Specifically, it is preferably in a range of 0.1 to 30 parts by mass, more preferably in a range of 0.5 to 10 parts by mass, and especially preferably in a range of 1 to 5 parts by mass relative to 100 parts by mass of the component (B).

[Curing Accelerator (C2)]

In the present invention, for the purpose of accelerating the curing, a curing accelerator (C2) (hereinafter also referred to as "component (C2)") may further be contained in the photochromic adhesive composition.

As for the component (C), in order to rapidly accelerate the curing of the photochromic adhesive composition, a reaction catalyst for urethane or urea, a condensing agent, or the like which is effective for the reaction with the active hydrogen-containing group and the iso(thio)cyanate group can be used.

(Component (C2); Reaction Catalyst for Urethane or Urea)

The reaction catalyst for urethane or urea is used in the generation of a poly(thio)urethane bond due to the reaction of a polyiso(thia)cyanate and a polyol or a polythiol. Examples of the reaction catalyst for urethane or urea include tertiary amines and inorganic or organic salts corresponding thereto, phosphines, quaternary ammonium salts, quaternary phosphonium salts, Lewis acids, and organic sulfonic acids. These reaction catalysts may be used alone or may be used in combination of two or more thereof.

Examples of the tertiary amine include triethylamine, tri-n-propylamine, triisopropylamine, tri-n-butylamine, triisobutylamine, triethylamine, hexamethylenetetramine, N,N-dimethyloctylamine, N,N,N',N'-tetramethyl-1,6-diaminohexane, 4,4'-trimethylenebis(1-methylpiperidine), and 1,8-diazabicyclo-(5,4,0)-7-undecene.

Examples of the phosphine include trimethylphosphine, triethylphosphine, tri-n-propylphosphine, triisopropylphosphine, tri-n-butylphosphine, triphenylphosphine, tribenzylphosphine, 1,2-bis(diphenylphosphino)ethane, and 1,2-bis(dimethylphosphino)ethane.

Examples of the quaternary ammonium salt include tetramethylammonium bromide, tetrabutylammonium chloride, and tetrabutylammonium bromide.

Examples of the quaternary phosphonium salt include tetramethylphosphonium bromide, tetrabutylphosphonium chloride, and tetrabutylphosphonium bromide.

Examples of the Lewis acids include triphenylaluminum, dimethyltin dichloride, dimethyltin bis(isooctyl thioglycolate), dibutyltin dichloride, dibutyltin dilaurate, dibutyltin maleate, a dibutyltin maleate polymer, dibutyltin diricinolate, dibutyltin bis(dodecyl mercaptide), dibutyltin bis(isooctyl thioglycolate), dioctyltin dichloride, dioctyltin maleate, a dioctyltin maleate polymer, dioctyltin bis(butyl maleate), dioctyltin dilaurate, dioctyltin diricinolate, dioctyltin dioleate, dioctyltin di(6-hydroxy)caproate, dioctyltin bis(isooctyl thioglycolate), didodecyltin diricinolate, and various metal salts (for example, salts, such as copper oleate, copper acetylacetonate, iron acetylacetonate, iron naphthenate, iron lactate, iron citrate, iron gluconate, potassium octoate, and 2-ethylhexyl titanate).

Examples of the organic sulfonic acids include methanesulfonic acid, benzenesulfonic acid, and p-toluenesulfonic acid.

When the catalytic activity is excessively high depending on the type of the compound to be selected, for example, by using a mixture of a tertiary amine and a Lewis acid, it is possible to supress the catalytic activity.

(Component (C2); Condensing Agent)

Examples of the condensing agent include inorganic acids, such as hydrogen chloride, hydrogen bromide, sulfuric acid, and phosphoric acid; organic acids, such as p-toluenesulfonic acid and camphorsulfonic acid; acidic ion exchange resins, such as AMBERLITE (a product name) and AMBERLYST (a product name); and carbodiimides, such as dicyclohexylcarbodiimide and 1-ethyl-3-(3-dimethylaminopyrrolyl)-carbodiimide. These condensing agents may be used alone or may be used in combination of two or more thereof.

(Blending Ratio of Component (C2))

The blending ratio of the component (C2) may be a so-called catalyst amount. For example, it may be in a range of about 0.001 to 10 parts by mass, and particularly about 0.01 to 5 parts by mass relative to 100 parts by mass of the component (B).

[Other Blending Components]

The photochromic adhesive composition can be blended with various known additives, for example, a UV absorber, an antistatic agent, an infrared absorber, a UV stabilizer, an antioxidant, an anti-coloring agent, a fluorescent dye, a dye, a pigment, a fragrance, a surfactant, a plasticizer, a solvent, a leveling agent, and a polymerization modifier (for example, thiols, such as t-dodecyl mercaptan) within a range where the effects of the present invention are not impaired.

The mixing ratio of the various additives is appropriately set within a range where the effects of the present invention are not impaired. Specifically, it is preferred that the total amount of the various additives falls within a range of 0.01 to 10 parts by mass relative to 100 parts by mass of the photochromic adhesive composition.

Among the various additives, the UV stabilizer is suitable because it is able to improve the durability of the photochromic compound. Examples of such a UV stabilizer include a hindered amine light stabilizer, a hindered phenol antioxidant, and a sulfur-based antioxidant. Examples of the especially preferred UV stabilizer include bis(1,2,2,6,6-pentamethyl-4-piperidyl) sebacate; ADEKA STAB LA-52, LA-57, LA-62, LA-63, LA-67, LA-77, LA-82, and LA-87 (all of which are manufactured by ADEKA Corporation); 2,6-di-t-butyl-4-methyl-phenol, ethylenebis(oxyethylene)bis[3-(5-t-butyl-4-hydroxy-m-tolyl)propionate]; and IRGANOX 1010, 1035, 1075, 1098, 1135, 1141, 1222, 1330, 1425, 1520, 259, 3114, 3790, 5057, and 565, and TINUVIN 249, 123, 144, 171, 292, 5100, 770D, 765, XT55FB, PA144, and 622SF (all of which are manufactured by BASF SE).

The blending ratio of the UV stabilizer is appropriately set within a range where the effects of the present invention are not impaired. Specifically, it is preferably 0.001 to 10 parts by mass, and more preferably 0.01 to 1 part by mass relative to 100 parts by mass of the component (B). In particular, in the case of using the hindered amine light stabilizer, the effect for improving the durability varies with the kind of the photochromic compound, and as a result, in order to prevent the occurrence of a color deviation of color development color tone to be adjusted, the blending ratio of the UV stabilizer is controlled to an amount of preferably 0.5 to 30 mols, more preferably 1 to 20 mols, and still more

preferably 2 to 15 mols per mol of the photochromic compound (A) within the aforementioned range.

Examples of the antistatic agent include an alkali metal or alkaline earth metal salt, a quaternary ammonium salt, a surfactant (such as a nonionic surfactant, an anionic surfactant, a cationic surfactant, and an amphoteric surfactant), and an ionic liquid (a salt which exists as a liquid at ordinary temperature and exists as a pair of a cation and an anion).

Examples of the alkali metal or alkaline earth metal salt include salts of an alkali metal (such as lithium, sodium, and potassium) or an alkaline earth metal (such as magnesium and calcium) and an organic acid [such as a mono- or dicarboxylic acid having 1 to 7 carbon atoms (such as formic acid, acetic acid, propionic acid, oxalic acid, and succinic acid), a sulfonic acid having 1 to 7 carbon atoms (such as methanesulfonic acid, trifluoromethanesulfonic acid, and p-toluenesulfonic acid), and thiocyanic acid]; and salts of an alkali metal or an alkaline earth metal and an inorganic acid [such as a hydrohalic acid (such as hydrochloric acid and hydrobromic acid), perchloric acid, sulfuric acid, nitric acid, and phosphoric acid].

Examples of the quaternary ammonium salts include salts of an amidinium (such as 1-ethyl-3-methylimidazolium) or a guanidinium (such as 2-dimethylamino-1,3,4-trimethylimidazolinium) and the aforementioned organic acid or the aforementioned inorganic acid.

Examples of the surfactant include a sucrose fatty acid ester, a sorbitan fatty acid ester, a polyoxyethylene sorbitan fatty acid ester, a polyoxyethylene fatty acid ester, a fatty acid alkanolamide, a polyoxyethylene alkyl ether, an alkyl glycoside, a polyoxyethylene alkylphenyl ether, a higher fatty acid salt (soap), an $\alpha$-sulfo fatty acid methyl ester salt, a linear alkylbenzene sulfonic acid salt, an alkyl sulfate ester salt, an alkyl ether sulfate ester salt, a (mono)alkyl phosphate ester salt, an $\alpha$-olefin sulfonic acid salt, an alkane sulfonic acid salt, an alkyl trimethyl ammonium salt, a dialkyldimethyl ammonium salt, an alkyldimethylbenzyl ammonium salt, an N-methylbishydroxyethylamine oil, a fatty acid ester hydrochloric acid salt, an alkylamino fatty acid salt, an alkylbetaine, and an alkylamine oxide.

Examples of the ionic liquid include 1,3-ethylmethylimidazolium bistrifluoromethanesulfonimide, 1,3-ethylmethylimidazolium tetrafluoroborate, 1-ethylpyridinium bistrifluoromethanesulfonimide, 1-ethylpyridinium tetrafluoroborate, 1-ethylpyridinium hexafluorophosphate, and 1-methylpyrazolium bistrifluoromethanesulfonimide.

Among the additives, a coloring agent having an absorption peak in a wavelength range of 550 to 600 nm is useful from the viewpoint of improving anti-glare properties. Examples of the coloring agent include a nitro-based compound, an azo-based compound, an anthraquinone-based compound, a threne-based compound, a porphyrin-based compound, and a rare earth metal compound. Of these, from the standpoint of a good balance between anti-glare properties and visibility, a porphyrin-based compound and a rare earth metal-based compound are preferred, and from the viewpoint of dispersion stability in the adhesive layer containing a urethane resin, a porphyrin-based compound is more preferred.

Examples of the rare earth metal compound include complexes, such as aquahydroxy(l-phenyl-1,3-butanedionato)neodymium, aquahydroxy(phenacylphenylketonato)neodymium, aquahydroxy(l-phenyl-2-methyl-1,3-butanedionato)neodymium, aquahydroxy(l-thiophenyl-1,3-butanedionato)neodymium, aquahydroxy(l-phenyl-1,3-butanedionate)erbium, and aquahydroxy(l-phenyl-1,3-butanedionate)holmium.

The porphyrin-based compound is a compound which may have various substituents in a porphyrin skeleton, and for example, compounds described in JP 5-194616 A, JP 5-195446 A, JP 2003-105218 A, JP 2008-134618 A, JP 2013-61653 A, JP 2015-180942 A, WO 2012/020570 A, Japanese Patent No. 5626081, Japanese Patent No. 5619472, and Japanese Patent No. 5778109 can be suitably used.

The viscosity of the photochromic adhesive composition of the present invention may be appropriately set in conformity with various conditions, such as those for manufacturing method. For example, in the case of applying the photochromic adhesive composition on one of the optical article plates as mentioned later, arranging the other optical article plate thereon, and then curing the photochromic adhesive composition to bond with the adhesive layer containing a urethane resin, there is a concern that the photochromic adhesive composition flows out before curing. In order to suppressing the flowing-out, it is preferred that the viscosity at 25°C of the photochromic adhesive composition is controlled to 100 mPa·s or more.

The photochromic optical article of the present invention may be provided with another layer on the outer surface, between the optical article plate and the adhesive layer, or in the interior of the adhesive layer according to the purpose. For example, there can be exemplified a layer having polarization properties.

As the layer having polarization properties, known polar films can be used without any restrictions. As for the thickness of the polar film, one having a thickness of 10 to 100 $\mu$m can be suitably used. The polar film is one formed by drawing polyvinyl alcohol dyed with a dichroic substance, such as iodine and a dichroic dye, and treating with a crosslinking agent, such as boric acid. The polar film may also be one in which a cellulose triacetate film is laminated on the both surfaces thereof for the purpose of enhancing the function and adhesiveness thereof. The thickness of the cellulose triacetate film is preferably 20 to 200 pm, and more preferably 20 to 100 pm.

In order to adjust the amount of moisture contained in the polarizing film and to provide the dimensional stability of the polarizing film, a polarizing film formed by carrying out a heating treatment at 40 to 100°C for about 5 seconds to 30 minutes before preparation of the laminate of the present invention can also be used.

<Method for Manufacturing Photochromic Optical Article>

In the case of manufacturing the photochromic optical article according to the present invention by using the aforementioned photochromic adhesive composition, the following method can be adopted.
The photochromic optical article can be manufactured by a method of applying a necessary amount of the photochromic adhesive composition on one of the optical article plates having a spacer arranged thereon, arranging the other optical article plate thereon, and then curing the photochromic adhesive composition to bond together the pair of optical article plates; or a method of providing the pair of optical article plates with a gap part using a spacer so as to have a prescribed gap, injecting the photochromic adhesive composition into the gap part between the pair of optical article plates, and then curing the photochromic adhesive composition to bond together the pair of optical article plates.
That is, the method for manufacturing the photochromic optical article of the present invention includes a step of applying a photochromic adhesive composition comprising (A) a photochromic compound and (B) at least one curable compound selected from a polyiso(thio)cyanate/poly(thi)ol mixture, an epoxy compound, and an acrylic compound on one of the optical article plates; a step of arranging a spacer on an applied surface of the optical article plate having the photochromic adhesive composition applied thereon and superimposing and arranging the other optical article plate so as to provide a predetermined gap; and a step of curing the photochromic adhesive composition to form an adhesive layer, thereby bonding together the pair of optical article plates.
In addition, another method for manufacturing the photochromic optical article of the present invention includes a step of arranging a spacer between a pair of optical article plates to provide a gap part of a prescribed gap; a step of injecting and filling a photochromic adhesive composition comprising (A) a photochromic compound and (B) at least one curable compound selected from a polyiso(thio)cyanate/poly(thi)ol mixture, an epoxy compound, and an acrylic compound into the gap part; and a step of curing the photochromic adhesive composition to form an adhesive layer, thereby bonding together the pair of optical article plates.
The method for curing the photochromic adhesive composition is not particularly restricted, and a known method can be adopted. Above all, it is preferred to perform thermal polymerization.
In the present invention, in order to suppress the occurrence of a poor appearance to be caused due to the matter that air is brought from a minute space produced by arranging the spacer through curing shrinkage in the curing process, it is needed to control the length of the spacer sandwiched between the pair of optical article plates. Here, the length of the spacer sandwiched between the pair of optical article plates refers to a length D of the spacer to be sandwiched from an outer extension part P of the pair of optical article plates toward the interior (see Fig. 1).
In the present invention, the length of the spacer sandwiched between the pair of optical article plates is needed to be 0.25 mm to 1.2 mm. When the length of the spacer sandwiched between the pair of optical article plates is shorter than 0.25 mm, the spacer is liable to come out during the manufacturing work. On the other hand, when it is longer than 1.2 mm, as mentioned above, a bubble is liable to be incorporated during curing to produce an article with a poor appearance.
Furthermore, in the present invention, it is preferred to control the curing temperature condition. Although the curing temperature condition cannot be unequivocally limited because it is affected by the kind and amount of the curing accelerator, a method in which curing is started at a relatively low temperature, and the temperature is slowly raised, followed by holding at a predetermined temperature is suitable.
That is, in the present invention, the step of curing the photochromic adhesive composition to form an adhesive layer, thereby bonding together the pair of optical article plates includes at least the following two steps:

(i) a temperature rise step of raising the temperature from a curing starting temperature to a predetermined curing temperature at a rate of 0.1°C to 1.6°C per minute, and subsequently
(ii) a constant temperature step of holding the predetermined curing temperature for a fixed time.

In the present invention, though the curing starting temperature and the predetermined curing temperature may be appropriately set by the kind and amount of the curing accelerator, in order that gelation (curing) of the photochromic adhesive composition may not be rapidly advanced, the curing starting temperature is preferably set to 25°C or higher and 60°C or lower.
In addition, with respect to the predetermined curing temperature and holding time, in order that not only poor curing may not be caused, but also yellowing of the adhesive layer due to heat may be prevented from occurring, the predetermined curing temperature is preferably set to 65°C or higher and 140°C or lower, and more preferably set to 70°C or higher and 130°C or lower. The holding time is preferably set to 0.25 hours or more and 6 hours or less, and more preferably set to 0.5 hours or more and 3 hours or less.
In the temperature rise step (i), plural temperature rise rates can also be continuously set within the prescribed temperature rise rate range.

<Spacer>

Although the shape of the spacer in the present invention is not particularly limited, it may be a spacer having an intermittent shape or a spacer having a continuous shape, and a spacer having an intermittent shape is suitable. The spacer having an intermittent shape as referred to herein is a spacer which when arranged between the pair of optical article plates, comes into contact with a part of the outer periphery of the optical article plate but does not come into contact with all of it; and the spacer having a continuous shape as referred to herein is a spacer which when arranged between the pair of optical article plates, continuously comes into the contact with the outer periphery of the optical article plate.

Examples of the spacer having an intermittent shape include a spacer having a strip shape and a spacer in which one end of a strip shape is in a circular arc shape or in a triangular shape. The spacer having a strip shaper is, for example, a spacer having a thin plate spacer.

Fig. 4 shows the case where the spacer is seen from the thickness direction. In Fig. 4, a is an example of a spacer in a strip shape, b is an example of a spacer in which one end of a strip shape is in a circular arc shape, and c is an example of a spacer in which one end of a strip shape is in a triangular shape.

Above all, in order to suppress the occurrence of a poor appearance as mentioned later, a spacer in which one end of a strip shape where an area sandwiched between the pair of optical article plates becomes smaller is in a circular arc shape or in a triangular shape is more preferred. On that occasion, it is preferred to arrange the spacer such that the one end thereof in a circular arc shape or in a triangular shape is sandwiched between the optical article plates.

In the case of a spacer in which one end of the strip shape is in a circular arc shape or a spacer in which one end of the strip shape is in a triangular shape, the length of the spacer sandwiched between the pair of optical article plates means a maximum value D (see Fig. 4) of the length of the spacer sandwiched from the outer extension part P of the optical article plate toward the interior thereof. In the case of using plural spacers, values of the aforementioned D are measured relative to the individual spacers, and an average value thereof is defined as a "length of the spacer sandwiched between the pair of optical article plates".

As for the material which is used for the spacer having an intermittent shape, resin-made sheets or metallic foils and the like can be used without restrictions within a range of material which is not deformed during curing.

As for the spacer having a continuous shape, a general-purpose elastomer gasket can be used.

Although the number of spacers to be used is not particularly limited, in order to fix the gap between the pair of optical article plates, it is suitably 4 to 8. As for the arrangement of spacers, it is preferred that the spacers are equally arranged, and for example, in the case of using 4 spacers, they may be arranged at intervals of 90°.

On the other hand, in the case of using a gasket, taking into consideration the exclusion of air incorporated on the occasion of applying the photochromic adhesive composition, or the exclusion of a gas produced at the time of curing, it is suitable to use gaskets with gaps at a certain interval. In this case, there are a plurality of locations where the pair of optical article plates are sandwiched between the gaskets. When there are 2 to 3 points to be sandwiched, it is suitable that 50% or more of the entire circumference is sandwiched. In the case of 4 points or more, it is suitable that the sandwiching portions are equally arranged.

Examples

The present invention is hereunder described in detail by reference to Examples, but it should be construed that the present invention is not limited thereto. In the Examples, the aforementioned respective components and evaluation methods of photochromic optical articles and the like are as follows.

(Respective Components)

<Photochromic Compound (A)>

PC1: Compound represented by the following formula

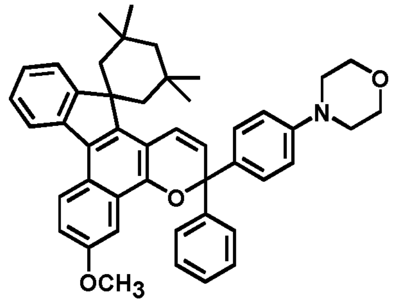

PC2: Compound represented by the following formula

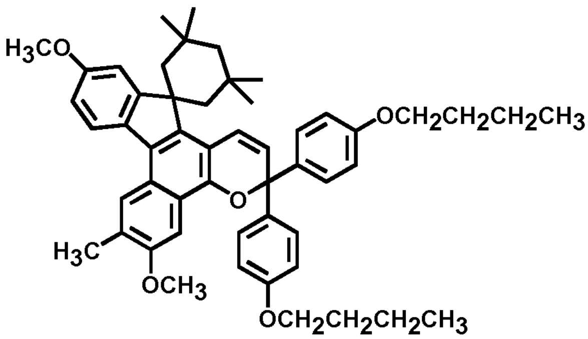

PC3: Compound represented by the following formula

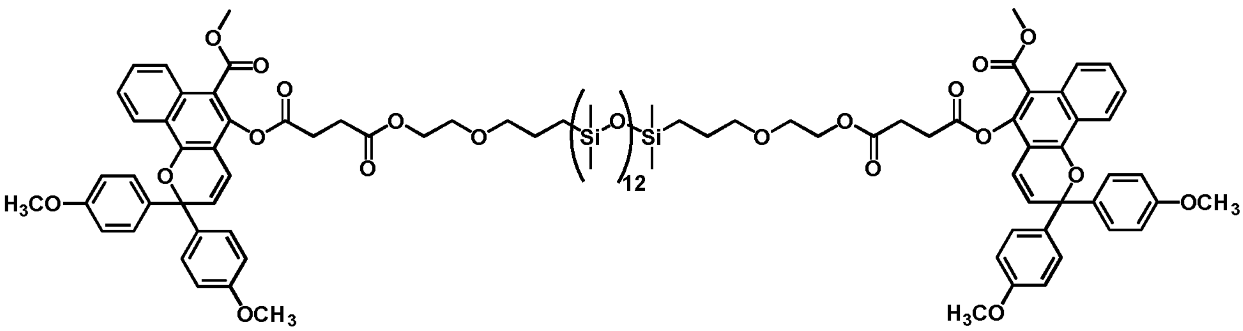

PC4: Compound represented by the following formula

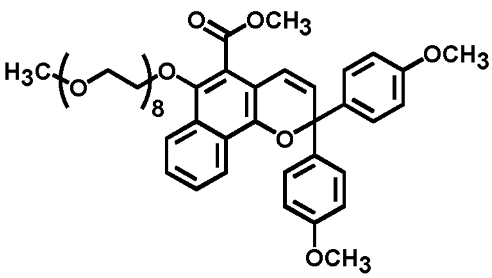

<Polyiso(thio)cyanate Compound (B1)>

H6XDI: 1,3-Bis(isocyanatomethyl)cyclohexane (isomer mixture)
NBDI: Norbornane diisocyanate

<Poly(thi)ol Compound (B2)>

PEMP: Pentaerythritol tetrakis(3-mercaptopropionate)
DPMP: Dipentaerythritol hexakis(3-mercaptopropionate)

<Mono(thi)ol Compound (B3)>

PGME10: Polyethylene glycol monooleyl ether ($n \approx 10$)
SMP: Stearyl-3-mercaptopropionate
TDMP: Tridecyl-3-mercaptopropionate
MA1: Polyoxyethylene lauryl ether ($n \approx 9$)
MA2: Polyoxyethylene hexadecyl ether ($n \approx 8$)
MA3: Polyoxyethylene hexadecyl ether ($n \approx 10$)
MA4: Polyoxyethylene hexadecyl ether ($n \approx 15$)
MA5: Polyoxyethylene octadecyl ether ($n \approx 11$)
MA6: Polyoxyethylene polyoxypropylene lauryl ether (polyoxyethylene chain repeating unit: $n \approx 7.4$, polyoxypropylene chain repeating unit: $m \approx 1.8$)
MA7: Polyoxyethylene polyoxypropylene lauryl ether (polyoxyethylene chain repeating unit: $n \approx 10$, polyoxypropylene chain repeating unit: $m \approx 2$)
MA8: Polyoxyethylene polyoxypropylene lauryl ether (polyoxyethylene chain repeating unit: $n \approx 15$, polyoxypropylene chain repeating unit: $m \approx 2.8$)

<Polyrotaxane Monomer (B4)>

RX-1: Polyrotaxane monomer synthesized by the method described in WO 2015/068798 A, etc.

<Curing Accelerator (C2)>

[Reaction Catalyst for Urethane or Urea]

C2: Dimethyldichlorotin

<Other Blending Components>

[Stabilizer]

HP: Ethylene bis(oxyethylene)bis[3-(5-tert-butyl-4-hydroxy-m-tolyl)propionate]

(Evaluation Methods)

[Deviation]

In a photochromic optical article formed by bonding together a pair of optical article plates with an adhesive layer, in the case where a maximum radius in the concentric circle a in Fig. 2 was defined as $r_{max}$, a deviation of the thickness with respect to concentric circles having a radius r of 0.2 $r_{max}$, a radius r of 0.5 $r_{max}$, and a radius r of 0.8 $r_{max}$, respectively was determined. In the photochromic optical articles obtained in the present Examples, specifically, 0.2 $r_{max}$ is corresponding to the radius of 7 mm, 0.5 $r_{max}$ is corresponding to the radius of 17.5 mm, and 0.8 $r_{max}$ is corresponding to the radius of 28 mm.

As a specific method for calculating the deviation of the bonding layer, first, for each of the pair of optical article plates before bonding, the thickness of the portion overlapping the measurement location to be measured after bonding is measured. Subsequently, the thickness of the same portion as that measured before bonding the photochromic optical article after bonding is measured. Then, the total thickness of each of the pair of optical article plates measured before bonding was subtracted from the thickness of the photochromic optical article after bonding to obtain the thickness of the adhesive layer.

The average thickness was calculated from the measured thicknesses of the adhesive layers at 12 points, and the deviation was calculated from the average thickness and the thickness of each measurement point.

[Appearance Evaluation]

The cured photochromic optical article was visually observed from the front. In particular, the appearance of the adhesive layer containing a urethane resin was evaluated according to the following criteria.

A: There is no air bubble in the vicinity of the outer periphery of the obtained optical article, there is no color development unevenness when visually evaluated in sunlight, and there is no yellowing when visually evaluated indoors.

B: There is at least one of a poor appearance among the production of 1 to 5 bubbles in the vicinity of the outer periphery of the obtained optical article, slight color development when visually evaluated in sunlight, and slight yellowing when visually evaluated indoors.

C: There is at least one of a remarkable poor appearance among the production of 6 bubbles or more in the vicinity of the outer periphery of the obtained optical article, obvious color development when visually evaluated in sunlight, and obvious yellowing when visually evaluated indoors.

[Adhesion]

The adhesion was evaluated based on the presence or absence of peeling when a metal piece having a width of 5 mm was pressed against the adhesive layer portion of the obtained optical article with a force of 10 kgf. The evaluation criteria are as follows.

1: Very good adhesion; no peeling was observed even after immersing the obtained optical article in distilled water at 100°C for 3 hours.
2: Good adhesion; no peeling was observed after immersing the obtained optical article in distilled water at 100°C for 1 hour, but peeling was observed after 2 hours of immersion.
3: Poor adhesion; the obtained optical article was peeled off before immersing in distilled water at 100°C.

[Photochromic Properties]

The values measured by a spectrophotometer (instantaneous multichannel photodetector MCPD-3000) manufactured by Otsuka Electronics Co., Ltd. were used.

[1] Maximum absorption wavelength ($\lambda$max): Maximum absorption wavelength after color development.
[2] Color development density: Difference between the absorbance {$\varepsilon$ (300)} after light irradiation at 23°C for 300 seconds and the absorbance $\varepsilon$ (0) when no light is irradiated at the maximum absorption wavelength.
[3] Fading half-life [$\tau$1/2 (sec)]: Time required when after light irradiation at 23°C for 300 second, the light irradiation is stopped, the absorbance of the sample at the maximum absorption wavelength is lowered to 1/2 of {$\varepsilon$ (300) - $\varepsilon$ (0)}.

<Example 1>

By the following formulation, the respective components were mixed to prepare a photochromic adhesive composition. Here, a ratio [n1/(n2 + n3 + n4)] of the total molar number of the iso(thio)cyanate group of the polyisocyanate compound as the component (B1) to the total molar number of the active hydrogen-containing groups of the components (B2) to (b4) is 1.05/1.

Formulation:

Photochromic compound (A): PC1, 1.86 parts by mass
Polyiso(thio)cyanate compound (B1): H6XDI, 37 parts by mass
Poly(thi)ol compound (B2): PEMP, 37 parts by mass
Mono(thi)ol compound (B3): PGME10, 4 parts by mass
Mono(thi)ol compound (B3): SMP, 18 parts by mass
Polyrotaxane monomer (B4): RX-1, 4 parts by mass
Curing accelerator (C2): C2, 0.05 parts mass
Stabilizer: HP, 0.3 parts by mass

Using the aforementioned photochromic adhesive composition, a photochromic optical article was manufactured by the following method. The photochromic adhesive composition was first sufficiently defoamed, and thereafter, about 0.5 g of the photochromic adhesive composition was applied onto a concave surface of a circular glass plate (optical article plate) having a refractive index of 1.52, an Abbe number of 60, a thickness of 1.0 mm, 6 curves, and $\phi$ = 70 mm, the surface of which had been chemically strengthened with potassium nitrate. Subsequently, a 0.1 mm-thick nylon-made spacer in which one end of a strip shape was in a circular arc shape was arranged at 4 points of the outer periphery of the glass plate at intervals of 90°, and a circular glass plate (optical article plate) having UV absorption properties so as to have a transmittance at 400 nm of 10% and having a refractive index of 1.52, an Abbe number of 60, a thickness of 1.0 mm, 6 curves, and $\phi$ = 70 mm, the surface of which had been chemically strengthened with potassium nitrate, was placed such that the center points of the respective glass plates were aligned, and the convex surfaces were bonded to the photochromic adhesive composition. Here, the length of the spacer sandwiched between the pair of glass plates (optical article plates) was set to 1.0 mm. In addition, the spacers were arranged such that one end of the circular arc shape was sandwiched between the pair of glass plates.

Subsequently, the resultant was allowed to stand in an air furnace heated to 60°C for 15 minutes to start curing. Subsequently, the temperature was raised to a curing temperature of 130°C over 120 minutes (temperature rise rate: 0.58°C/min), and then, the temperature was held at 130°C for 1 hour to cure the photochromic adhesive composition to bond together the pair of glass plates (optical article plates), thereby obtaining a photochromic optical article.

The obtained photochromic optical article was evaluated by the aforementioned methods. The evaluation results are shown in Table 1.

<Examples 2 to 4>; Examples in which the components of the adhesive composition are different

Photochromic optical articles were manufactured and evaluated by the same method as in Example 1, except for using the following compositions as the photochromic adhesive composition. The evaluation results are shown in Table 1.

(Example 2)

Photochromic compound (A): PC1, 1.86 parts by mass
Polyiso(thio)cyanate compound (B1): H6XDI, 37 parts by mass
Poly(thi)ol compound (B2): PEMP, 63 parts by mass
Curing accelerator (C2): C2, 0.05 parts mass
Stabilizer: HP, 0.3 parts by mass

(Example 3)

Photochromic compound (A): PC1, 1.86 parts by mass
Polyiso(thio)cyanate compound (B1): NBDI, 39 parts by mass
Poly(thi)ol compound (B2): PEMP, 37 parts by mass
Mono(thi)ol compound (B3): PGME10, 4 parts by mass
Mono(thi)ol compound (B3): SMP, 16 parts by mass
Polyrotaxane monomer (B4): RX-1, 4 parts by mass
Curing accelerator (C2): C2, 0.05 parts mass
Stabilizer: HP, 0.3 parts by mass

(Example 4)

Photochromic compound (A): PC1, 1.86 parts by mass
Polyiso(thio)cyanate compound (B1): H6XDI, 37 parts by mass
Poly(thi)ol compound (B2): DPMP, 39 parts by mass
Mono(thi)ol compound (B3): PGME10, 4 parts by mass
Mono(thi)ol compound (B3): SMP, 16 parts by mass

Polyrotaxane monomer (B4): RX-1, 4 parts by mass
Curing accelerator (C2): C2, 0.05 parts mass
Stabilizer: HP, 0.3 parts by mass

(Example 5)

A photochromic optical article was manufactured and evaluated by the same method as in Example 1, except for using the following composition as the photochromic adhesive composition. The evaluation results are shown in Table 1.

Photochromic compound: PC1, 1.86 parts by mass
Polyethylene glycol dimethacrylate (average chain length of ethylene glycol chain: 14, average molecular weight: 736): 30 parts by mass
2,2-Bis[4-(methacryloxy/polyethoxy)phenyl]propane (average chain length of ethylene glycol chain: 10, average molecular weight: 804): 30 parts by mass
Esterified product of polyalkylene carbonate diol comprising mainly of pentane diol and hexane diol and acrylic acid (average molecular weight: 640, (meth)acrylic equivalent: 320): 10 parts by mass
Trimethylolpropane trimethacrylate: 29 parts by mass
Glycidyl methacrylate: 1 part by mass
γ-Methacryloxypropyl trimethoxysilane: 5 parts by mass
Bis(1,2,2,6,6-pentamethyl-4-piperidyl) sebacate: 3 parts by mass
Phenyl bis(2,4,6-trimethylbenzoyl)-phosphine oxide: 0.3 parts by mass
Stabilizer: HP, 0.3 parts by mass

(Example 6)

A photochromic optical article was manufactured and evaluated by the same method as in Example 1, except that in Example 1, PC2 was used in place of PC1. The evaluation results are shown in Table 1.

Table 1

| | Length of spacer sandwiched between a pair of plates (mm) | Curing condition | | | | | Deviation (%) | | | Appearance | Adhesion | $\lambda max$ (nm) | Color development density | $\tau 1/2$ (sec) |
|---|---|---|---|---|---|---|---|---|---|---|---|---|---|---|
| | | Curing starting temperature (°C) | Curing temperature (°C) | Temperature rise time (min) | Temperature rise rate (°C/min) | Holding time (hrs) | 0.2 $r_{max}$ | 0.5 $r_{max}$ | 0.8 $r_{max}$ | | | | | |
| Example 1 | 1.0 | 60 | 130 | 120 | 0.58 | 1 | ±5 | ±5 | ±5 | A | 1 | 580 | 0.96 | 66 |
| Example 2 | | | | | | | ±5 | ±5 | ±5 | A | 1 | 585 | 0.01 | >300 |
| Example 3 | | | | | | | ±5 | ±5 | ±5 | A | 1 | 585 | 0.96 | 66 |
| Example 4 | | | | | | | ±5 | ±5 | ±5 | A | 1 | 585 | 0.96 | 60 |
| Example 5 | | | | | | | ±5 | ±5 | ±5 | A | 2 | 580 | 0.87 | 98 |
| Example 6 | | | | | | | ±5 | ±5 | ±5 | A | 1 | 575 | 0.75 | 75 |

<Examples 7 to 11 and Comparative Example 1>; Examples in which the length of the spacer sandwiched is different

Photochromic optical articles were manufactured and evaluated by the same method as in Example 1, except that the length of the spacer sandwiched between the pair of glass plates (optical article plates) was regulated to 0.2 mm (Comparative Example 1), 0.25 mm (Example 7), 0.3 mm (Example 8), 0.5 mm (Example 9), 1.2 mm (Example 10), and 1.5 mm (Example 11), respectively. The evaluation results are shown in Table 2.

Table 2

| | Length of spacer sandwiched between a pair of plates (mm) | Curing condition | | | | | Deviation (%) | | | Appearance | Adhesion | λmax (nm) | Color development density | τ1/2 (sec) |
|---|---|---|---|---|---|---|---|---|---|---|---|---|---|---|
| | | Curing starting temperature (°C) | Curing temperature (°C) | Temperature rise time (min) | Temperature rise rate (°C/min) | Holding time (hrs) | 0.2 $r_{max}$ | 0.5 $r_{max}$ | 0.8 $r_{max}$ | | | | | |
| Comparative Example 1 | 0.2 | 60 | 130 | 120 | 0.58 | 1 | ±20 | ±20 | ±20 | C | 1 | 580 | 0.96 | 66 |
| Example 7 | 0.25 | | | | | | ±5 | ±5 | ±5 | A | 1 | 580 | 0.96 | 66 |
| Example 8 | 0.3 | | | | | | ±5 | ±5 | ±5 | A | 1 | 580 | 0.96 | 66 |
| Example 9 | 0.5 | | | | | | ±5 | ±5 | ±5 | A | 1 | 580 | 0.96 | 66 |
| Example 1 | 1.0 | | | | | | ±5 | ±5 | ±5 | A | 1 | 580 | 0.96 | 66 |
| Example 10 | 1.2 | | | | | | ±5 | ±5 | ±5 | A | 1 | 580 | 0.96 | 66 |
| Example 11 | 1.5 | | | | | | ±5 | ±5 | ±5 | B | 1 | 580 | 0.96 | 66 |

<Examples 12 to 16>; Examples in which the temperature rise rate is different

Photochromic optical articles were manufactured and evaluated by the same method as in Example 1, except that the curing temperature was regulated to 70°C (Example 12), 90°C (Example 13), 110°C (Example 14), 130°C (Example 15), and 140°C (Example 16), respectively so as to have the temperature rise rate as shown in Table 3; and that only in Example 12, the holding time was changed to 3 hours. The evaluation results are shown in Table 3.

Table 3

| | Length of spacer sandwiched between a pair of plates (mm) | Curing condition | | | | | Deviation (%) | | | Appearance | Adhesion | λmax (nm) | Color development density | τ1/2 (sec) |
|---|---|---|---|---|---|---|---|---|---|---|---|---|---|---|
| | | Curing starting temperature (°C) | Curing temperature (°C) | Temperature rise time (min) | Temperature rise rate (°C/min) | Holding time (hrs) | 0.2 $r_{max}$ | 0.5 $r_{max}$ | 0.8 $r_{max}$ | | | | | |
| Example 12 | 1.0 | 60 | 70 | 120 | 0.08 | 3 | ±5 | ±5 | ±5 | A | 1 | 580 | 0.96 | 66 |
| Example 13 | | | 90 | | 0.25 | 1 | ±5 | ±5 | ±5 | A | 1 | 580 | 0.96 | 66 |
| Example 14 | | | 110 | | 0.42 | | ±5 | ±5 | ±5 | A | 1 | 580 | 0.96 | 66 |
| Example 15 | | | 130 | | 0.58 | | ±5 | ±5 | ±5 | A | 1 | 580 | 0.96 | 66 |
| Example 16 | | | 140 | | 0.67 | | ±5 | ±5 | ±5 | A | 1 | 580 | 0.96 | 66 |

<Examples 17 to 25>; Examples in which the temperature rise rate is different

Photochromic optical articles were manufactured and evaluated by the same method, except for changing the curing starting time, the curing temperature, the temperature rise temperature, the temperature rise rate, and the holding time as shown in Table 4. The evaluation results are shown in Table 4.

Table 4

| | Length of spacer sandwiched between a pair of plates (mm) | Curing condition | | | | | Deviation (%) | | | Appearance | Adhesion | λmax (nm) | Color development density | τ1/2 (sec) |
|---|---|---|---|---|---|---|---|---|---|---|---|---|---|---|
| | | Curing starting temperature (°C) | Curing temperature (°C) | Temperature rise time (min) | Temperature rise rate (°C/min) | Holding time (hrs) | 0.2 $r_{max}$ | 0.5 $r_{max}$ | 0.8 $r_{max}$ | | | | | |
| Example 17 | 1.0 | 25 | 125 | 1000 | 0.10 | 1 | ±5 | ±5 | ±5 | A | 1 | 580 | 0.96 | 66 |
| Example 18 | | 60 | 70 | 60 | 0.17 | 3 | ±5 | ±5 | ±5 | A | 1 | 580 | 0.96 | 66 |
| Example 19 | | 60 | 90 | 60 | 0.50 | 1 | ±5 | ±5 | ±5 | A | 1 | 580 | 0.96 | 66 |
| Example 20 | | 25 | 125 | 120 | 0.83 | 1 | ±5 | ±5 | ±5 | A | 1 | 580 | 0.96 | 66 |
| Example 21 | | 60 | 110 | 60 | 0.83 | 1 | ±5 | ±5 | ±5 | A | 1 | 580 | 0.96 | 66 |
| Example 22 | | 60 | 130 | 60 | 1.17 | 1 | ±5 | ±5 | ±5 | A | 1 | 580 | 0.96 | 66 |
| Example 23 | | 60 | 140 | 60 | 1.33 | 1 | ±5 | ±5 | ±5 | A | 1 | 580 | 0.96 | 66 |
| Example 24 | | 25 | 125 | 60 | 1.67 | 1 | ±5 | ±5 | ±5 | B | 1 | 580 | 0.96 | 66 |
| Example 25 | | 25 | 125 | 30 | 3.33 | 1 | ±5 | ±5 | ±5 | B | 1 | 580 | 0.96 | 66 |

<Examples 26 to 33>; Examples using different optical article plates

Photochromic optical articles were manufactured and evaluated by the same method as in Example 1, except for using the following combination as the combination of the pair of glass plates (optical article plates). The evaluation results are shown in Table 5.

(Example 26)

- Circular glass plate having a refractive index of 1.52, an Abbe number of 60, a thickness of 1.0 mm, 0.5 curves, and $\phi$ = 70 mm, the surface of which had been chemically strengthened with potassium nitrate
- Circular glass plate having UV absorption properties so as to have a transmittance at 400 nm of 10% and having a refractive index of 1.52, an Abbe number of 60, a thickness of 1.0 mm, 0.5 curves, and $\phi$ = 70 mm, the surface of which had been chemically strengthened with potassium nitrate

(Example 27)

- Circular glass plate having a refractive index of 1.52, an Abbe number of 60, a thickness of 1.0 mm, 8 curves, and $\phi$ = 70 mm, the surface of which had been chemically strengthened with potassium nitrate
- Circular glass plate having UV absorption properties so as to have a transmittance at 400 nm of 10% and having a refractive index of 1.52, an Abbe number of 60, a thickness of 1.0 mm, 8 curves, and $\phi$ = 70 mm, the surface of which had been chemically strengthened with potassium nitrate

(Example 28)

- Circular glass plate having a refractive index of 1.52, an Abbe number of 60, a thickness of 1.0 mm, 6 curves, and $\phi$ = 70 mm, the surface of which had been chemically strengthened with potassium nitrate
- Circular glass plate cutting blue light of 430 nm or less and having a refractive index of 1.52, an Abbe number of 60, a thickness of 1.0 mm, 6 curves, and $\phi$ = 70 mm

(Example 29)

- Circular glass plate having a refractive index of 1.8, an Abbe number of 34, a thickness of 1.0 mm, 6 curves, and $\phi$ = 70 mm
- Circular glass plate having a refractive index of 1.8, an Abbe number of 34, a thickness of 1.0 mm, 6 curves, and $\phi$ = 70 mm

(Example 30)

- Circular glass plate having a refractive index of 1.9, an Abbe number of 30, a thickness of 1.0 mm, 6 curves, and $\phi$ = 70 mm
- Circular glass plate having a refractive index of 1.9, an Abbe number of 30, a thickness of 1.0 mm, 6 curves, and $\phi$ = 70 mm

(Example 31)

- Circular glass plate having a refractive index of 1.8, an Abbe number of 34, a thickness of 1.0 mm, 6 curves, and $\phi$

= 70 mm

- Circular glass plate having a refractive index of 1.8, an Abbe number of 34, a thickness of 4.0 mm, 6 curves, and $\phi$ = 70 mm

(Example 32)

- Circular glass plate having a refractive index of 1.9, an Abbe number of 30, a thickness of 1.0 mm, 6 curves, and $\phi$ = 70 mm
- Circular glass plate having a refractive index of 1.9, an Abbe number of 30, a thickness of 4.0 mm, 6 curves, and $\phi$ = 70 mm

(Example 33)

A photochromic optical article was manufactured and evaluated by the same method as in Example 1, except that the following combination was used as the combination of the pair of glass plates (optical article plates); and that the photochromic adhesive composition was cured together with a gray polarized film having been dyed with a dichroic dye and having a thickness of 27 $\mu$m, a visual transmittance of 42.5%, and a degree of polarization of 99.2%. The evaluation results are shown in Table 5.

- Circular glass plate having a refractive index of 1.52, an Abbe number of 60, a thickness of 1.0 mm, 6 curves, and $\phi$ = 70 mm, the surface of which had been chemically strengthened with potassium nitrate
- Circular glass plate cutting blue light of 430 nm or less and having a refractive index of 1.52, an Abbe number of 60, a thickness of 1.0 mm, 6 curves, and $\phi$ = 70 mm

Table 5

| | Length of spacer sandwiched between a pair of plates (mm) | Curing condition | | | | | Deviation (%) | | | Appearance | Adhesion | λmax (nm) | Color development density | τ1/2 (sec) |
|---|---|---|---|---|---|---|---|---|---|---|---|---|---|---|
| | | Curing starting temperature (°C) | Curing temperature (°C) | Temperature rise time (min) | Temperature rise rate (°C/min) | Holding time (hrs) | 0.2 $r_{max}$ | 0.5 $r_{max}$ | 0.8 $r_{max}$ | | | | | |
| Example 26 | 1.0 | 60 | 130 | 120 | 0.58 | 1 | ±5 | ±5 | ±5 | A | 1 | 580 | 0.96 | 66 |
| Example 27 | | | | | | | ±5 | ±5 | ±5 | A | 1 | 580 | 0.96 | 66 |
| Example 28 | | | | | | | ±5 | ±5 | ±5 | A | 1 | 580 | 0.96 | 66 |
| Example 29 | | | | | | | ±5 | ±5 | ±5 | A | 1 | 580 | 0.96 | 66 |
| Example 30 | | | | | | | ±5 | ±5 | ±5 | A | 1 | 580 | 0.96 | 66 |
| Example 31 | | | | | | | ±5 | ±5 | ±5 | A | 1 | 580 | 0.96 | 66 |
| Example 32 | | | | | | | ±5 | ±5 | ±5 | A | 1 | 580 | 0.96 | 66 |
| Example 33 | | | | | | | ±5 | ±5 | ±5 | A | 1 | 580 | 1.10 | 66 |

<Examples 34 to 35 and Comparative Examples 2 to 3>; Examples in which the arrangement of spacers is different

Photochromic optical articles were manufactured and evaluated by the same method as in Example 1, except that with respect to the arrangement of spacers, no spacer was used (Comparative Example 2), the spacers were arranged at two points at intervals of 180° (Comparative Example 3), the spacers were arranged at three points at intervals of 120°

(Example 34), and the spacers were arranged at eight points at intervals of 45° (Example 35). The evaluation results were shown in Table 6.

Table 6

| | Length of spacer sandwiched between a pair of plates (mm) | Curing condition | | | | | Deviation (%) | | | Appearance | Adhesion | λmax (nm) | Color development density | τ1/2 (sec) |
|---|---|---|---|---|---|---|---|---|---|---|---|---|---|---|
| | | Curing starting temperature (°C) | Curing temperature (°C) | Temperature rise time (min) | Temperature rise rate (°C/min) | Holding time (hrs) | 0.2 $r_{max}$ | 0.5 $r_{max}$ | 0.8 $r_{max}$ | | | | | |
| Comparative Example 2 | 1.0 | 60 | 130 | 120 | 0.58 | 1 | ±20 | ±20 | ±20 | C | 1 | 580 | 0.96 | 66 |
| Comparative Example 3 | | | | | | | ±18 | ±18 | ±18 | C | 1 | 580 | 0.96 | 66 |
| Example 34 | | | | | | | ±10 | ±10 | ±10 | B | 1 | 580 | 0.96 | 66 |
| Example 35 | | | | | | | ±4 | ±4 | ±4 | A | 1 | 580 | 0.96 | 66 |
| Example 1 | | | | | | | ±5 | ±5 | ±5 | A | 1 | 580 | 0.96 | 66 |

<Examples 36 to 45>; Examples in which a glass and an organic material are combined

Photochromic optical articles were manufactured and evaluated by the same method as in Example 1, except that using, as the optical article plates, a circular glass plate having a refractive index of 1.52, an Abbe number of 60, a thickness of 1.0 mm, 5 curves, and $\phi$ = 70 mm and a circular polythiourethane-made plate having a refractive index of 1.6, a thickness of 2.0 mm, 5 curves, and $\phi$ = 70 mm, the following compositions were cured under the conditions shown in Table 7. The evaluation results are shown in Table 7.

(Example 36)

Photochromic compound (A): PC1, 1.86 parts by mass
Polyiso(thio)cyanate compound (B1): H6XDI, 38 parts by mass
Poly(thi)ol compound (B2): PEMP, 41 parts by mass
Mono(thi)ol compound (B3): MA1, 14 parts by mass
Mono(thi)ol compound (B3): TDMP, 3 parts by mass
Curing accelerator (C2): C2, 0.05 parts mass
Release agent: 0.1 parts by mass
Stabilizer: HP, 0.3 parts by mass

(Example 37)

Photochromic compound (A): PC1, 1.86 parts by mass
Polyiso(thio)cyanate compound (B1): H6XDI, 38 parts by mass
Poly(thi)ol compound (B2): PEMP, 41 parts by mass
Mono(thi)ol compound (B3): MA2, 14 parts by mass
Mono(thi)ol compound (B3): TDMP, 3 parts by mass
Curing accelerator (C2): C2, 0.05 parts mass
Release agent: 0.1 parts by mass
Stabilizer: HP, 0.3 parts by mass

(Example 38)

Photochromic compound (A): PC1, 1.86 parts by mass
Polyiso(thio)cyanate compound (B1): H6XDI, 37 parts by mass
Poly(thi)ol compound (B2): PEMP, 41 parts by mass
Mono(thi)ol compound (B3): MA3, 15 parts by mass
Mono(thi)ol compound (B3): TDMP, 3 parts by mass
Curing accelerator (C2): C2, 0.05 parts mass
Release agent: 0.1 parts by mass
Stabilizer: HP, 0.3 parts by mass

(Example 39)

Photochromic compound (A): PC1, 1.86 parts by mass
Polyiso(thio)cyanate compound (B1): H6XDI, 36 parts by mass
Poly(thi)ol compound (B2): PEMP, 42 parts by mass
Mono(thi)ol compound (B3): MA4, 15 parts by mass
Mono(thi)ol compound (B3): TDMP, 3 parts by mass
Curing accelerator (C2): C2, 0.05 parts mass
Release agent: 0.1 parts by mass

Stabilizer: HP, 0.3 parts by mass

(Example 40)

Photochromic compound (A): PC1, 1.86 parts by mass
Polyiso(thio)cyanate compound (B1): H6XDI, 37 parts by mass
Poly(thi)ol compound (B2): PEMP, 41 parts by mass
Mono(thi)ol compound (B3): MA5, 15 parts by mass
Mono(thi)ol compound (B3): TDMP, 3 parts by mass
Curing accelerator (C2): C2, 0.05 parts mass
Release agent: 0.1 parts by mass
Stabilizer: HP, 0.3 parts by mass

(Example 41)

Photochromic compound (A): PC1, 1.86 parts by mass
Polyiso(thio)cyanate compound (B1): H6XDI, 38 parts by mass
Poly(thi)ol compound (B2): PEMP, 43 parts by mass
Mono(thi)ol compound (B3): MA6, 15 parts by mass
Mono(thi)ol compound (B3): TDMP, 3 parts by mass
Curing accelerator (C2): C2, 0.05 parts mass
Release agent: 0.1 parts by mass
Stabilizer: HP, 0.3 parts by mass

(Example 42)

Photochromic compound (A): PC1, 1.86 parts by mass
Polyiso(thio)cyanate compound (B1): H6XDI, 37 parts by mass
Poly(thi)ol compound (B2): PEMP, 41 parts by mass
Mono(thi)ol compound (B3): MA7, 15 parts by mass
Mono(thi)ol compound (B3): TDMP, 3 parts by mass
Curing accelerator (C2): C2, 0.05 parts mass
Release agent: 0.1 parts by mass
Stabilizer: HP, 0.3 parts by mass

(Example 43)

Photochromic compound (A): PC1, 1.86 parts by mass
Polyiso(thio)cyanate compound (B1): H6XDI, 36 parts by mass
Poly(thi)ol compound (B2): PEMP, 42 parts by mass
Mono(thi)ol compound (B3): MA8, 15 parts by mass
Mono(thi)ol compound (B3): TDMP, 3 parts by mass
Curing accelerator (C2): C2, 0.05 parts mass
Release agent: 0.1 parts by mass
Stabilizer: HP, 0.3 parts by mass

(Example 44)

Photochromic compound (A): PC3, 1.86 parts by mass
Polyiso(thio)cyanate compound (B1): H6XDI, 38 parts by mass
Poly(thi)ol compound (B2): PEMP, 41 parts by mass
Mono(thi)ol compound (B3): MA1, 14 parts by mass
Mono(thi)ol compound (B3): TDMP, 3 parts by mass
Curing accelerator (C2): C2, 0.05 parts mass
Release agent: 0.1 parts by mass
Stabilizer: HP, 0.3 parts by mass

(Example 45)

Photochromic compound (A): PC4, 1.86 parts by mass
Polyiso(thio)cyanate compound (B1): H6XDI, 38 parts by mass
Poly(thi)ol compound (B2): PEMP, 41 parts by mass
Mono(thi)ol compound (B3): MA1, 14 parts by mass
Mono(thi)ol compound (B3): TDMP, 3 parts by mass
Curing accelerator (C2): C2, 0.05 parts mass
Release agent: 0.1 parts by mass
Stabilizer: HP, 0.3 parts by mass

Table 7

| | Length of spacer sandwiched between a pair of plates (mm) | Curing condition | | | | | Deviation (%) | | | Appearance | Adhesion | λmax (nm) | Color development density | τ1/2 (sec) |
|---|---|---|---|---|---|---|---|---|---|---|---|---|---|---|
| | | Curing starting temperature (°C) | Curing temperature (°C) | Temperature rise time (min) | Temperature rise rate (°C/min) | Holding time (hrs) | 0.2 $r_{max}$ | 0.5 $r_{max}$ | 0.8 $r_{max}$ | | | | | |
| Example 36 | 1.0 | 25 | 70 | 60 | 0.75 | 3 | ±5 | ±5 | ±5 | A | 1 | 580 | 0.82 | 88 |
| Example 37 | | | | | | | ±5 | ±5 | ±5 | A | 1 | 580 | 0.90 | 62 |
| Example 38 | | | | | | | ±5 | ±5 | ±5 | A | 1 | 580 | 0.90 | 56 |
| Example 39 | | | | | | | ±5 | ±5 | ±5 | A | 1 | 580 | 0.90 | 49 |
| Example 40 | | | | | | | ±5 | ±5 | ±5 | A | 1 | 580 | 0.90 | 52 |
| Example 41 | | | | | | | ±5 | ±5 | ±5 | A | 1 | 580 | 0.82 | 76 |
| Example 42 | | | | | | | ±5 | ±5 | ±5 | A | 1 | 580 | 0.90 | 69 |
| Example 43 | | | | | | | ±5 | ±5 | ±5 | A | 1 | 580 | 0.90 | 43 |
| Example 44 | | | | | | | ±5 | ±5 | ±5 | A | 1 | 520 | 0.78 | 72 |
| Example 45 | | | | | | | ±5 | ±5 | ±5 | A | 1 | 520 | 0.80 | 60 |

From the aforementioned results, it was noted that in the photochromic optical article in which the deviation in thickness of the adhesive layer is a fixed level or less, the poor appearance is reduced.

As is evident from the aforementioned results, by regulating the length of the spacer sandwiched between a pair of soda glass-made plates (optical article plates), a photochromic optical article free from the poor appearance can be manufactured.

In addition, by regulating the temperature rise rate, a photochromic optical article having no poor appearance can be manufactured. That is, by regulating the temperature rise rate to 1.6°C per minute or less, in particular, 0.1°C to 1.6°C per minute, the poor appearance in which bubbles remain in the periphery of the spacer is reduced.

Furthermore, even when the kind of the pair of optical article plates is different, the same effects can be exhibited.

Reference Signs List

1: Photochromic optical article
2: Optical article plate
3: Adhesive layer containing a urethane resin
4: Optical article plate
5: Spacer
10: Polyrotaxane monomer
20: Axis molecule
30: Cyclic molecule
40: Bulky end group
50: Side chain

**Claims**

1. A photochromic optical article comprising a pair of optical article plates bonded together through an adhesive layer containing a photochromic compound and at least one resin selected from a urethane resin, an epoxy resin, and an acrylic resin, wherein a deviation of the thickness of the adhesive layer on a concentric circle from the central point of the pair of optical article plates is within ±10%.

2. The photochromic optical article according to claim 1, wherein the adhesive layer is an adhesive layer containing a photochromic compound and a urethane resin.

3. The photochromic optical article according to claim 2, wherein the adhesive layer is an adhesive layer resulting from curing a photochromic adhesive composition containing (A) a photochromic compound, (B1) a polyiso(thio)cyanate compound having two or more iso(thio)cyanate groups in a molecule thereof, and (B2) a poly(thi)ol compound having two or more active hydrogen-containing groups selected from a hydroxy group and a thiol group in a molecule thereof.

4. The photochromic optical article according to claim 3, wherein the photochromic adhesive composition further contains (B3) a mono(thi)ol compound having one active hydrogen-containing group selected from a hydroxy group and a thiol group in a molecule thereof.

5. The photochromic optical article according to claim 4, wherein the mono(thi)ol compound (B3) having one active hydrogen-containing group selected from a hydroxy group and a thiol group in a molecule thereof is a compound represented by the following formula (XXI):

$$R^{200}\text{-J-}R^{201}\text{-K-}R^{202} \qquad \text{(XXI)}$$

wherein $R^{200}$ is a monovalent organic group; $R^{201}$ is a divalent organic group; $R^{202}$ is an organic group having one hydroxy group or thiol group; and J and K represent a polymer chain different from each other.

6. The photochromic optical article according to any one of claims 1 to 5, wherein at least one of the pair of optical article plates is an optical article plate having a refractive index of 1.7 or more.

7. A method for manufacturing a photochromic optical article formed of a pair of optical article plates bonded together

through an adhesive layer, in which a deviation of the thickness of the adhesive layer on a concentric circle from the central point of the pair of optical article plates is within ±10%, the method comprising

a step of applying a photochromic adhesive composition comprising (A) a photochromic compound and (B) at least one curable compound selected from a polyiso(thio)cyanate/poly(thi)ol mixture, an epoxy compound, and an acrylic compound on one of the optical article plates;
a step of arranging a spacer on an applied surface of the optical article plate having the photochromic adhesive composition applied thereon and superimposing and arranging the other optical article plate so as to provide a predetermined gap; and
a step of curing the photochromic adhesive composition to form an adhesive layer, thereby bonding together the pair of optical article plates, wherein
the spacer is arranged in the outer periphery of the optical article plate, and a length of the spacer sandwiched between the pair of optical article plates is 0.25 mm to 1.2 mm.

**8.** A method for manufacturing a photochromic optical article formed of a pair of optical article plates bonded together through an adhesive layer, in which a deviation of the thickness of the adhesive layer on a concentric circle from the central point of the pair of optical article plates is within ±10%, the method comprising

a step of arranging a spacer between a pair of optical article plates to provide a gap part of a prescribed gap;
a step of injecting and filling a photochromic adhesive composition comprising (A) a photochromic compound and (B) at least one curable compound selected from a polyiso(thio)cyanate/poly(thi)ol mixture, an epoxy compound, and an acrylic compound into the gap part; and
a step of curing the photochromic adhesive composition to form an adhesive layer, thereby bonding together the pair of optical article plates, wherein
the spacer is arranged in the outer periphery of the optical article plate, and a length of the spacer sandwiched between the pair of optical article plates is 0.25 mm to 1.2 mm.

**9.** The method for manufacturing a photochromic optical article according to claim 7 or 8, wherein the step of curing the photochromic adhesive composition to form an adhesive layer, thereby bonding together the pair of optical article plates comprises (i) a temperature rise step of raising the temperature from a curing starting temperature to a predetermined curing temperature at a rate of 0.1°C to 1.6°C per minute, and subsequently (ii) a constant temperature step of holding the predetermined curing temperature for a fixed time.

Fig. 1

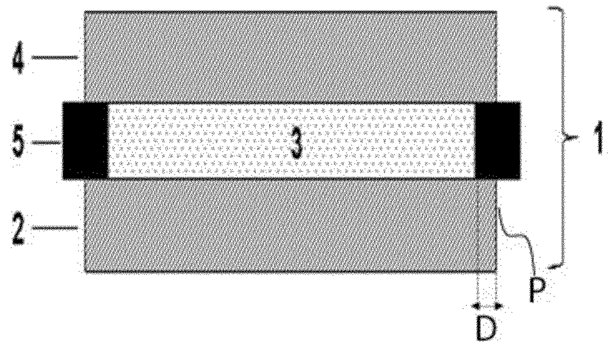


Fig. 2

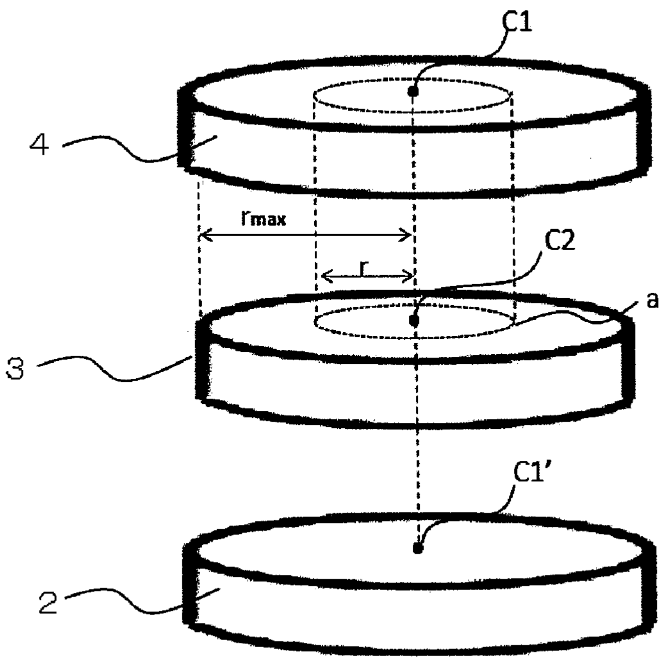

Fig. 3

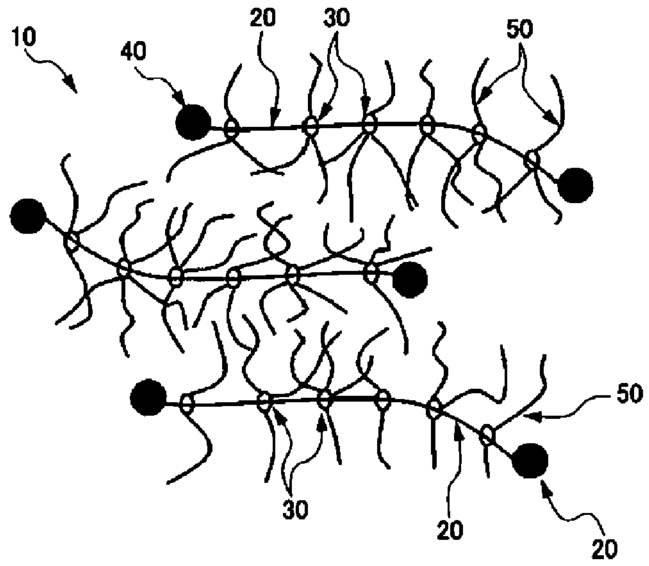


Fig. 4

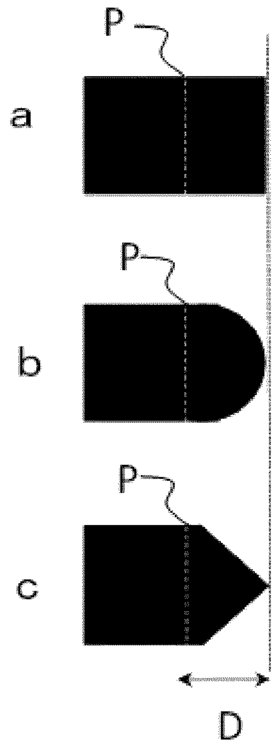

**INTERNATIONAL SEARCH REPORT**

International application No.
PCT/JP2020/015374

A. CLASSIFICATION OF SUBJECT MATTER
Int.Cl. C03C21/00(2006.01)i, C09J11/06(2006.01)i, C09K9/02(2006.01)i, G02C7/10(2006.01)i, C09J175/04(2006.01)i, C08G18/28(2006.01)i, C08G18/32(2006.01)i, C08G18/38(2006.01)i, C08G18/66(2006.01)i, C08G18/72(2006.01)i, C08G18/75(2006.01)i, G02B5/23(2006.01)i
FI: G02B5/23, C08G18/66066, C08G18/75, C03C21/00101, C09K9/02B, C09J11/06, C08G18/28015, C08G18/28080, C08G18/32003, C08G18/38, C08G18/72, G02C7/10, C09J175/04
According to International Patent Classification (IPC) or to both national classification and IPC

B. FIELDS SEARCHED
Minimum documentation searched (classification system followed by classification symbols)
Int.Cl. C03C21/00, C09J11/06, C09K9/02, G02C7/10, C09J175/04, C08G18/28, C08G18/32, C08G18/38, C08G18/66, C08G18/72, C08G18/75, G02B5/23

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2017/154901 A1 (MITSUBISHI GAS CHEMICAL COMPANY, INC.) 14.09.2017 (2017-09-14), claims, paragraph [0047], etc. | 1-3<br>4-6 |
| Y | JP 2017-19973 A (TOKUYAMA CORPORATION) 26.01.2017 (2017-01-26), paragraphs [0092]-[0094] | 4-5 |
| Y | WO 2018/003998 A1 (HOYA LENS THAILAND LTD.) 04.01.2018 (2018-01-04), paragraph [0017] | 6 |
| X<br>Y | JP 2010-536983 A (LG CHEMICAL LTD.) 02.12.2010 (2010-12-02), claims, paragraphs [0037], [0040], [0046], etc. | 8-9<br>7 |
| Y | JP 2018-185475 A (MITSUI CHEMICALS, INC.) 22.11.2018 (2018-11-22), paragraph [0046] | 7 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15.06.2020 | 23.06.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/015374

| | | |
|---|---|---|
| WO 2017/154901 A1 | 14.09.2017 | US 2019/0084278 A1<br>claims, page 7, table 1, etc.<br>EP 3428698 A1<br>CN 108700689 A<br>KR 10-2018-0120736 A<br>TW 201808633 A |
| JP 2017-19973 A | 26.01.2017 | (Family: none) |
| WO 2018/003998 A1 | 04.01.2018 | US 2018/0341121 A1<br>paragraph [0028]<br>EP 3480651 A1<br>KR 10-2018-0086245 A<br>AU 2017287530 A<br>CN 108474969 A |
| JP 2010-536983 A | 02.12.2010 | US 2010/0157407 A1<br>claims, paragraphs [0039], [0042], [0048], etc.<br>WO 2009/028833 A2<br>KR 10-2009-0021105 A<br>CN 101784591 A |
| JP 2018-185475 A | 22.11.2018 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014136804 A
- JP 2007138186 A
- JP 2012052091 A
- JP 1033154 A
- JP 2003139914 A
- JP 2019015319 W
- JP 2028154 A
- JP 62288830 A
- WO 9422850 A
- WO 9614596 A
- JP 2001114775 A
- JP 2001031670 A
- JP 2001011067 A
- JP 2001011066 A
- JP 2000347346 A
- JP 2000344762 A
- JP 2000344761 A
- JP 2000327676 A
- JP 2000327675 A
- JP 2000256347 A
- JP 2000229976 A
- JP 2000229975 A
- JP 2000229974 A
- JP 2000229973 A
- JP 2000229972 A
- JP 2000219687 A
- JP 2000219686 A
- JP 2000219685 A
- JP 11322739 A
- JP 11286484 A
- JP 11279171 A
- JP 10298176 A
- JP 9218301 A
- JP 9124645 A
- JP 8295690 A
- JP 8176139 A
- JP 8157467 A
- US 5645767 A
- US 5658501 A
- US 5961892 A
- US 6296785 B
- JP 4424981 B
- JP 4424962 B
- WO 2009136668 A
- WO 2008023828 A
- JP 4369754 B
- JP 4301621 B
- JP 4256985 B
- WO 2007086532 A
- JP 2009120536 A
- JP 2009067754 A
- JP 2009067680 A
- JP 2009057300 A
- JP 4195615 B
- JP 4158881 B
- JP 4157245 B
- JP 4157239 B
- JP 4157227 B
- JP 4118458 B
- JP 2008074832 A
- JP 3982770 B
- JP 3801386 A
- WO 2005028465 A
- WO 2003042203 A
- JP 2005289812 A
- JP 2005289870 A
- JP 2005112772 A
- JP 3522189 B
- WO 2002090342 A
- JP 3471073 B
- JP 2003277381 A
- WO 2001060811 A
- WO 2000071544 A
- WO 201116582 A
- WO 2011034202 A
- WO 2012121414 A
- WO 2013042800 A
- JP 6031035 B
- WO 2000015630 A
- WO 2004041961 A
- WO 2005105874 A
- WO 2005105875 A
- WO 2006022825 A
- WO 2009146509 A
- WO 201020770 A
- WO 2012149599 A
- WO 2012162725 A
- WO 2012176918 A
- WO 2013078086 A
- WO 2019013249 A
- JP 2018079303 A
- JP 2018136374 A
- WO 2015068798 A
- JP 5194616 A
- JP 5195446 A
- JP 2003105218 A
- JP 2008134618 A
- JP 2013061653 A

- JP 2015180942 A
- WO 2012020570 A
- JP 5626081 B
- JP 5619472 B
- JP 5778109 B